(19) Europäisches Patentamt
European Patent Office
Office européen des brevets

(11) **EP 4 462 325 A1**

(12) **EUROPEAN PATENT APPLICATION**
published in accordance with Art. 153(4) EPC

(43) Date of publication:
**13.11.2024 Bulletin 2024/46**

(21) Application number: **22918536.8**

(22) Date of filing: **30.12.2022**

(51) International Patent Classification (IPC):
**G06Q 10/06** (2023.01)

(52) Cooperative Patent Classification (CPC):
**G06Q 10/06**

(86) International application number:
**PCT/CN2022/144358**

(87) International publication number:
**WO 2023/131095 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2022 CN 202210001772**
**04.01.2022 CN 202210001948**

(71) Applicant: **Wuhan Lotus Cars Co., Ltd.**
**Wuhan, Hubei 430056 (CN)**

(72) Inventors:
• **PAN, Jianwei**
**Wuhan, Hubei 430056 (CN)**
• **HU, Jiankan**
**Wuhan, Hubei 430056 (CN)**
• **BIAN, Jun**
**Wuhan, Hubei 430056 (CN)**
• **LI, Bo**
**Wuhan, Hubei 430056 (CN)**

(74) Representative: **Zaboliene, Reda**
**Metida**
**Business center Vertas**
**Gyneju str. 16**
**01109 Vilnius (LT)**

(54) **TRAFFIC ENVIRONMENTAL RISK ASSESSMENT METHOD AND APPARATUS, AND RISK ASSESSMENT METHOD AND APPARATUS**

(57) A traffic environmental risk assessment method. The method comprises: acquiring environmental risk information in the current traveling environment of a vehicle (300) (S101); determining a target environmental risk type according to the environmental risk information (S103); acquiring a target environmental risk type influence factor which corresponds to the target environmental risk type, and determining a target risk point which corresponds to the target environmental risk type, wherein the target risk point indicates a predetermined position of a possible collision with the vehicle (300) (S105); calculating environmental risk potential energy of the target risk point on the basis of the target environmental risk type influence factor and the environmental risk information (S107); and if the environmental risk potential energy reaches a preset threshold value, sending takeover early-warning information (S109). The risk assessment method in the present invention is simple and feasible; and a target environmental risk type corresponding to environmental risk information is determined, such that targeted determination and processing are performed on different types of traffic environmental risks, thereby realizing the comprehensive assessment of the traffic environmental risks.

FIG.1

## Description

### TECHNICAL FIELD

The invention relates to the technical field of automatic driving, and in particular to a traffic environment risk assessment method, a risk assessment method and apparatus.

### BACKGROUND

In recent years, with the continuous development of artificial intelligence, autonomous driving has gradually become a research hotspot in the field of transportation. The Society of Automotive Engineers divides the stage of autonomous driving into the following six levels: L0 level-manual driving, L1 level-assisted driving, L2 level-partially automatic driving, L3 level-conditional automatic driving, L4 level-highly automatic driving and L5 level- fully autonomous driving. When the vehicle is at the L3 level, the automatic driving system can replace the driver for most of the driving operations, and the driver's attention can be appropriately transferred to certain driving tasks. However, when the vehicle encounters an emergency and sends a takeover request, if the driver's cognitive ability does not meet the needs of taking over the vehicle, it will lead to poor takeover performance and have a greater impact on driving safety.

Since the ability of the automatic driving system to drive under specific conditions is dynamic, it is not deterministic. For example, strong backlight or rainy and snowy weather will reduce the ability of the system to perceive the surrounding traffic environment and increase the probability of traffic accidents. At the same time, due to the complexity and real-time variability of traffic conditions faced by the automatic driving system, real-time assessment of traffic environment risks is of great help to reducing the traffic accident rate in the human-machine co-driving stage of autonomous vehicles, improving road traffic safety, and ensuring driving safety is particularly critical.

The current way of assessing the current driving risk only considers the current road traffic environment, and does not take into account the fluctuation of the ability of the automatic driving system in different external environments. The external environment will affect the control ability of the automatic driving system on the vehicle, which may lead to the failure of the automatic driving system to achieve safe driving in the same road traffic situation. In addition, most of the methods of traffic environmental risk assessment in the existing technology are more complex, and cannot conduct a comprehensive assessment of traffic environmental risks, which is difficult to deal with the dangerous situation brought by different types of traffic environmental risks, and there are hidden dangers.

## SUMMARY

In view of this, the purpose of the present invention is to provide a traffic environment risk assessment method, risk assessment method and device, through targeted judgment and treatment of different types of traffic environment risks, and then can comprehensively assess various potential traffic environment risks Accurate assessment is carried out, and the assessment method is simple, so as to at least solve the technical problems in the relevant prior art that cannot comprehensively and accurately assess various potential environmental risks and the assessment method is relatively complicated.

According to one aspect of the present invention, a traffic environment risk assessment method is provided, the traffic environment risk assessment method including:

obtaining an environmental risk information in a current driving environment of a vehicle;
determining a target environmental risk type according to the environmental risk information;
obtaining a target-environmental-risk-type-impact factor corresponding to the target environmental risk type, and determining a target risk point corresponding to the target environmental risk type, the target risk point indicating a predicted location that may collide with the vehicle;
calculating an environmental risk potential energy of the target risk point, based on the target-environmental-risk-type-impact factor and the environmental risk information;
sending a takeover warning information, when the environmental risk potential reaches a preset threshold.

In one embodiment, obtaining the target-environmental-risk-type-impact factor corresponding to the target environmental risk type, including:

obtaining a mapping relationship table; the mapping relationship table is configured to represent mapping relationships between various environmental risks and the corresponding risk type impact factors.
obtaining the target-environmental-risk-type-impact factor matching the target environmental risk type, based on the target environmental risk type matching in the mapping relationship table.

In one embodiment, the target environmental risk type of the environmental risk information includes a visual risk type, and correspondingly, the environmental risk information includes a dynamic obstruction information and/or static obstruction information, then determining the target risk point corresponding to the target environmental risk type, includes:
determining a location of a dynamic obstruction and/or a static obstruction relative to the vehicle as the target risk point.

In one embodiment, the target environmental risk type of the environmental risk information includes an invisible risk type, and correspondingly, the environmental risk information includes a blind area information, and the blind area indicates an area on a driving path of the vehicle, and may have a risk of collision formed by an obstruction that blocks a driver's field of vision, the determining the target risk point corresponding to the target environmental risk type, includes:
determining whether the dynamic obstruction can pass through the corresponding obstruction according to the blind area information;

when yes, then determine a starting location of the obstruction relative to the vehicle as the target risk point.

In one embodiment, the method also includes:
when the dynamic obstruction cannot pass through the obstruction, then determining a terminal location of the obstruction relative to the vehicle as the target risk point.

In one embodiment, calculating the environmental risk potential energy of the target risk point, based on the target-environmental-risk-type-impact factor and the environmental risk information includes:

obtaining a relative distance, a relative speed and an angle between the vehicle and the corresponding environmental risk, according to the environmental risk information;
calculating the environmental risk potential energy of the target risk point, according to the target-environmental-risk-type-impact factor, the relative distance, the relative speed and the angle, wherein an expression of the environmental risk potential energy of the target risk point is as follows:

$$RE_{aj} = f(\vec{r}_{aj}, \vec{v}_{ja}, \theta, M_{type}, k_1, k_2);$$

wherein:

$\vec{r}_{aj}$ represents the relative distance;
$\vec{v}_{ja}$ represents the relative speed;
$\theta$ represents the angle of the $\vec{r}_{aj}$ and $\vec{v}_{ja}$;
$M_{type}$ represents the target-environmental-risk-type-impact factor;
$k_1$ represents a distance impact factor;
$k_2$ represents a speed impact factor.

In one embodiment, sending the takeover warning information, when the environmental risk potential reaches the preset threshold, includes:

when the environmental risk potential energy reaches a first preset threshold, sending a first takeover warning information;
when the environmental risk potential reaches a second preset threshold, sending a second takeover warning information, wherein the second preset threshold is greater than the first preset threshold;

In one embodiment, sending the takeover warning information, when the environmental risk potential reaches the preset threshold, further includes:
when no takeover confirmation information is received within a preset time interval after sending the second takeover warning information, then adjusting driving parameter of the vehicle to a preset parameter.

In one embodiment, the method further includes:

obtaining a road condition risk information based on a map information;
determining a starting location corresponding to a road condition risk when the road condition risk information satisfies a preset road condition risk type;
sending a third takeover warning information, when the distance between the vehicle and the starting point satisfies a preset distance.

According to the other aspect of the present invention, provide a risk assessment method, includes:

determining a system capability information based on a state information of a vehicle driving system;
determining an environmental safety information according to a traffic environment around a vehicle;
determining a risk assessment information based on the system capability information and the environmental safety information;
determining a target risk assessment result according to the risk assessment information.

In one embodiment, determining the system capability information based on the state information of the vehicle driving system includes:

obtaining a first performance information corresponding to a perception module;
determining a first state information corresponding to the perception module based on the first performance information;
obtaining a location information of the vehicle;
obtaining a driving track information;
obtaining a second performance information corresponding to a control module;
determining a second state information corresponding to the control module based on the driving track information, the location information, and the second performance information;
obtaining a third performance information corresponding to an execution module;
determining a third state information corresponding to the execution module based on the third performance information;

determining the system capability information according to the first state information, the second state information and the third state information.

In one embodiment, determining the environmental safety information according to the traffic environment around the vehicle, includes:

determining a target environmental risk type according to the traffic environment;
obtaining a target-environmental-risk-type-impact factor corresponding to the target environmental risk type;
determining the environmental safety information according to the traffic environment and the target-environmental-risk-type-impact factor.

In one embodiment, the method further includes:

uploading the first performance information, the driving track information, the location information, the second performance information, the third performance information, the system capability information, the environmental safety information, and the risk assessment information and the target assessment result to the cloud.

In one embodiment, the method further includes:

determining a driver state information;
updating the risk assessment information based on the driver state information;
uploading the driver state information and an updated risk assessment information to the cloud.

In one embodiment, the method further includes:

obtaining a historical data in the cloud, when the system capability information, the environmental safety information and/or the driver state information are missing; wherein the historical data includes the system capability information, the environmental safety information and/or the driver state information;
determining a missing system capability information, environmental safety information, and/or driver state information based on the historical data.

In one embodiment, after determining the target risk assessment result according to the risk assessment information, includes:

classifying a scope of the risk assessment information to obtain a risk level information;
determining a risk level corresponding to a current vehicle based on the target risk assessment result and the risk level information;
sending a safe driving operation instruction corresponding to the risk level to the vehicle driving system and/or sending a safety driving reminder to a driver corresponding to the risk level, based on the level classification information, when the risk level reaches a preset level.

According to another aspect of the present invention, provided a traffic environment risk assessment device, includes:

a first obtaining module, configured to obtain an environmental risk information in a current driving environment of a vehicle;
a determination module, configured to determine a target environmental risk type according to the environmental risk information;
a second obtaining module, configured to obtain a target-environmental-risk-type-impact factor corresponding to the target environmental risk type, and determine a target risk point corresponding to the target environmental risk type, the target risk point indicating a predicted location that may collide with the vehicle ;
a calculation module, configured to calculate an environmental risk potential energy of the target risk point, based on the target-environmental-risk-type-impact factor and the environmental risk information;
an information sending module, configured to send a takeover warning information, when the environmental risk potential reaches a preset threshold.

According to another aspect of the present invention, a risk assessment device includes:

a system capability information determination module, configured to determine a system capability information according to a state information of a vehicle driving system;
an environmental safety information determination module, configured to determine an environmental safety information according to a traffic environment around a vehicle;
a risk assessment information determination module, configured to determine a risk assessment information based on the system capability information and the environmental safety information;
a target risk assessment result determination module, configured to determine a target risk assessment result according to the risk assessment information.

According to another aspect of the present invention, provided an electronic device, includes: processor; memory for storing processor-executable instructions; wherein, the processor is configured to execute the instructions, so as to realize the traffic environment risk assessment method or the risk assessment method.

According to another aspect of the present invention, provided a computer-readable storage medium, characterized in that, when instructions in the computer-readable storage medium are executed by a processor of an electronic device, the electronic device can execute the traffic environment risk assessment method or the risk assessment method.

The traffic environmental risk assessment method, risk assessment method and device provided by the invention firstly obtain the environmental risk information of the vehicle in the current driving environment, then determine the target environmental risk type, determine the target-environmental-risk-type-impact factor and the target risk point according to the target environmental risk type, and then calculate the environmental risk potential energy of the target risk point. The environmental risk potential energy is configured to judge whether the current driving is safe, so that the takeover warning information can be sent in time to remind the driver. The above traffic environmental risk assessment method is simple and easy to implement, and through targeted judgment and treatment of different types of traffic environmental risks, it can accurately infer the risk points corresponding to different types of traffic environmental risks, and then assess the size of environmental risks. The scope of risk assessment can cover all visible risks and invisible risks on the vehicle's driving path. It can comprehensively and accurately assess a variety of potential traffic environmental risks to cope with the dangers brought by different types of traffic environmental risks, effectively improve the scope and accuracy of risk assessment, and further reduce safety hazards.

## BRIEF DESCRIPTION OF THE DRAWINGS

In order to more clearly state the technical scheme and advantages of the embodiments of the invention or the prior art, the following is a brief introduction of the drawings required to be used in the description of the embodiments or the prior art. It is obvious that the drawings described below are only some embodiments of the invention. For ordinary technicians in the field, without creative labor, other drawings can also be obtained from these drawings.

FIG. 1 is a schematic flow diagram of a traffic environment risk assessment method shown according to an exemplary embodiment;
FIG. 2 is a second schematic flow diagram of a traffic environment risk assessment method shown according to an exemplary embodiment;
FIG. 3 is a schematic flow diagram three of a traffic environment risk assessment method shown according to an exemplary embodiment;
FIG. 4 is a schematic flow diagram four of a traffic environment risk assessment method shown according to an exemplary embodiment;
FIG. 5 is a schematic diagram of a blind area corresponding to a traversable barrier according to an exemplary embodiment;
FIG. 6 is a schematic diagram of a blind area corresponding to an impenetrable barrier according to an exemplary embodiment;
FIG. 7 is a schematic flow diagram five of a traffic environment risk assessment method shown according to an exemplary embodiment;
FIG. 8 is a schematic flow diagram six of a traffic environment risk assessment method according to an exemplary embodiment;
FIG. 9 is a schematic diagram of an application environment of a risk assessment method provided by an embodiment of the present application;
FIG. 10 is a schematic flow diagram of a risk assessment method provided in the embodiment of the present application;
FIG. 11 is a schematic flow diagram one of a risk assessment method provided in the embodiment of the present application;
FIG.12 is a schematic flow diagram two of a risk assessment method provided in the embodiment of the present application;
FIG. 13 is a schematic flow diagram three of a risk assessment method provided in the embodiment of the present application;
FIG.14 is a schematic flow diagram four of a risk assessment method provided in the embodiment of the present application;
FIG. 15 is a schematic flow diagram five of a risk assessment method provided in the embodiment of the present application;
FIG. 16 is a schematic flow diagram six of a risk assessment method provided in the embodiment of the present application;
FIG. 17 is a block diagram of a traffic environment risk assessment device according to an exemplary embodiment;
FIG. 18 is a schematic structural diagram of a risk assessment device provided in an embodiment of the present application;
FIG. 19 is a block diagram showing an electronic device for traffic environment risk assessment according to an exemplary embodiment.

The accompanying drawings are supplemented as follows:
100- penetrable occlusion, 200- impenetrable obstruction, 300-vehicle, 901-first obtaining module, 903-determination module, 905-second obtaining module, 907-calculation module, 909-information sending module.

## EMBODIMENTS OF PRESENT APPLICATION

In order to enable personnel in the technical field to better understand the scheme of the invention, the technical scheme in the embodiment of the invention is described clearly and completely in combination with the drawings attached to the embodiment of the invention. Obviously, the described embodiment is only a part of the embodiment of the invention, but not all of the embodiments. Based on the embodiments of the invention, all other embodiments obtained by ordinary skilled persons in the field without creative labor shall fall within the scope of protection of the invention.

"An Embodiment" or "embodiment" herein means a particular feature, structure or characteristic that may be included in at least one realization of the invention. In the description of the invention, it is to be understood that the terms "first", "second", "third" and "fourth" in the specification and claims of the invention and in the drawings above are configured to distinguish different objects and not to describe a particular sequence. Furthermore, the terms "including" and "having", and any variation thereof, are intended to cover non-exclusive inclusion. For example, a process, method, system, product or device comprising a series of steps or units is not limited to the listed steps or units, but optionally also includes steps or units not listed, or optionally includes other steps or units inherent to those processes, methods, products or devices.

The term "exemplary" is used here to mean "to serve as an example, embodiment, or illustrative". Any embodiment herein described as "exemplary" need not be construed as superior or better than other embodiments.

In addition, in order to better explain this application, many specific details are given in the specific implementation mode below. It should be understood by those skilled in the art that this application can be implemented without certain specific details. In some instances, methods, means, components and circuits that are well known to those skilled in the art are not described in detail in order to highlight the thrust of the present application.

Embodiment:

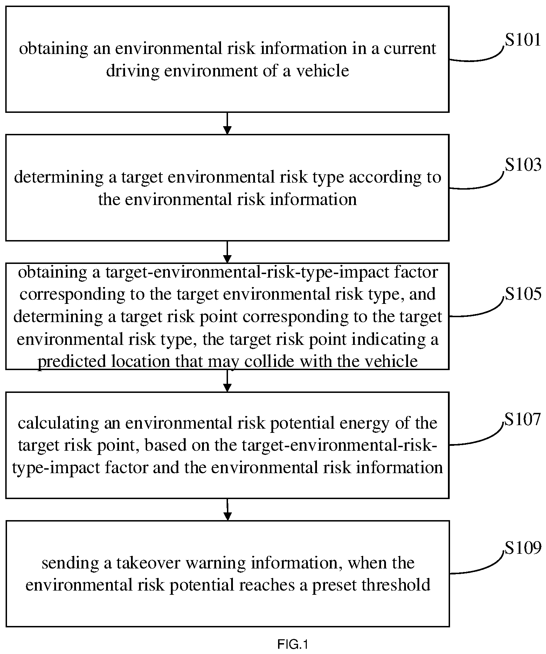

Please refer to FIG. 1, which is a flow diagram of a traffic environmental risk assessment method based on an exemplary embodiment. FIG. 1 provides the method operating steps such as embodiments or flow diagrams, but may include more or fewer operating steps based on routine or uncreative labor. The sequence of steps listed in the embodiments is only one way in which the sequence of steps is executed, and does not represent a unique sequence of execution. In the actual system or server product execution, it can be executed sequentially or in parallel according to the embodiments or the methods shown in the attached drawings (such as parallel processor or multi-threaded processing environment). As shown in FIG. 1, the traffic environmental risk assessment methods can include:

S101, obtaining an environmental risk information in a current driving environment of a vehicle.

Specifically, environmental risk information can refer to the information of things that exist in the current driving environment of the vehicle and may pose a threat to the safety of the vehicle. For example, a dynamic obstruction information (such as an information about pedestrians, motor vehicles, non-motor vehicles and other related things), a static obstruction information (such as an information about roadblocks, bushes and other things that do not move), a road condition risk information (such as traffic flow, sections with high incidence of accidents, etc.), and visual blind area information.

For example, the vehicle's surrounding environment can be monitored in real time by cameras, radars, sensors and other detection devices set on the vehicle as well as high-precision maps or navigation systems, so as to obtain the environmental risk information in the vehicle's current driving environment in real time. Taking the dynamic obstruction information or the static obstruction information as an example, when the detection device detects an obstruction that may pose a threat to the vehicle safety, it obtains the environmental risk information corresponding to the dynamic obstruction in real time, including the relative distance between the dynamic obstruction and the vehicle, relative speed, shape and type of the dynamic obstruction and so on. Take the road condition risk information as an example. When the navigation system learns that there is a road condition risk such as a road section with high accident incidence or a congested road section in front of the vehicle's driving path according to the map information, it obtains the environmental risk information corresponding to the road condition risk in real time, including the starting point of the road condition risk and the relative distance between the road condition risk and the vehicle. Taking the visual field blind area information as an example, when the detection device detects the visual field blind area with possible collision risk formed by the obstruction that blocks a driver's field of vision on the vehicle's driving path, it obtains the corresponding environmental risk information of the visual field blind area in real time, including the relative distance between the obstruction and the vehicle, the size, the type of obstruction, and the scope of the blind area and so on. In addition to the above examples of environmental risk information, there are other types of environmental risk information, and their detection and information acquisition processes are basically the same as the above examples, and will not be described here.

S103, determining a target environmental risk type according to the environmental risk information.

Specifically, the target environmental risk type refers to the risk type corresponding to the above environmental risks detected in the current driving environment. For example, the traffic environment risk can be divided into visible risk types (dynamic obstructions, static obstructions, etc., which can be directly detected by the sensor in the field of vision in advance), and invisible risk types (such as invisible risks for example: visual blind area, the obstructions in the visual blind area and that will collide with the vehicle and cannot be directly detected by the sensor in advance); of course, traffic environmental risk can also be classified into other types, such as dynamic risk type and static risk type according to the movement information of the environmental risk information. According to the orientation information of environmental risk information, it can be divided into the side orientation risk type, the front risk type or the rear risk type. Or according to the types of target objects corresponding to environmental risk information, it can be divided into pedestrian, car, truck, roadblock, blind area, road conditions and other risk types. The environmental risk information can also be classified into primary risk type, secondary risk type, and tertiary risk type according to the emergency state or severity level information. The lower the level, the more urgent and serious the corresponding environmental risk is. The classification method can be set according to the actual needs, a variety of, here is no longer listed one by one, for example, you can also combine a variety of classification methods, superposition, priority sorting and other operations, in order to achieve a comprehensive and accurate assessment of the risk, the vehicle to minimize the potential risk.

In practical applications, different traffic environment risks will bring different threats to vehicle driving safety. Traditional risk assessment methods do not consider different types of environmental risks, or the different impacts on vehicle driving safety caused by physical object shape, visual field blind area, road condition risk and other environments, so that the risk cannot be comprehensively and accurately assessed. This embodiment classifies various traffic environmental risks, and determines its target environmental risk types according to the obtained environmental risk information in the vehicle's current driving environment, so as to judge and deal with different types of environmental risks, and thus achieve a comprehensive and accurate assessment of traffic environmental risks.

S105,obtaining a target-environmental-risk-type-impact factor corresponding to the target environmental risk type, and determining a target risk point corresponding to the target environmental risk type, the target risk point indicating a predicted location that may collide with the vehicle.

Specifically, different types of environmental risks should have different environmental risk type impact factors, which are related to the type of the potential environmental risks, the obstruction size, the vehicle speed, and the relative distance between the vehicle and the environmental risks. As an example, the type of potential environmental risk is the human, the car or the large vehicle, and the corresponding environmental risk type impact factor is different. The environmental risk type impact factor can be a coefficient configured to characterize the risk size corresponding to different types of environmental risk, that is, to evaluate the severity of the risk.

Different types of environmental risks may collide with the vehicle in different locations and in different ways, that is, different types of environmental risks should have different risk points, which can refer to the predicted location where the environmental risk may collide with the vehicle. Take the environmental risk detected in the current driving environment as a dynamic obstruction as an example. The risk point corresponding to the environmental risk is the location of the dynamic obstruction. If the environmental risk detected is congested road condition, the corresponding risk point is the starting point of the corresponding congested road section relative to the vehicle. If the detected environmental risk is a visual field blind area formed by an obstruction, if the obstruction can be traversed by a dynamic obstruction, the starting location of the obstruction relative to the vehicle is the risk point; if the obstruction cannot be traversed by a dynamic obstruction, the terminal location of the obstruction relative to the vehicle is the risk point. For example, the risk point can refer to a precise location point or a location range, which can be set according to actual needs or the type of environmental risk, without too much limitation.

In practical application, when the target environmental risk type corresponding to the environmental risk information is determined, the corresponding target-environmental-risk-type-impact factor is obtained according to the target environmental risk type, and the target risk point corresponding to the target environmental risk type is determined. According to different types of environmental risks, the corresponding environmental risk type impact factors and risk points are determined to realize the targeted treatment of different types of environmental risks, which is conducive to the comprehensive and accurate assessment of the traffic environmental risks.

S107, calculating an environmental risk potential energy of the target risk point, based on the target-environmental-risk-type-impact factor and the environmental risk information.

Specifically, for general obstructions, the risk has at least the following characteristics: 1. the closer the vehicle is to the obstruction, the greater the risk; 2. the greater the relative speed of the vehicle and the obstruction, the greater the risk. According to the above characteristics, environmental risk potential energy is chosen as the basic model of traffic environmental risk. For example, environmental risk = collision risk = collision probability × severity, then the environmental risk potential energy at the risk point corresponding to the environmental risk is calculated based on the environmental risk information and the environmental risk type impact factors corresponding to the environmental risk information. The environmental risk potential energy is configured to represent the risk magnitude corresponding to the environmental risk. The greater the environmental risk potential energy, the greater the environmental risk, and the greater the threat caused by self-propelled vehicles.

The environmental risk mathematical model is established for environmental risks, the environmental risk potential energy is calculated, and the environmental risk potential energy is configured to evaluate the size of environmental risks, so as to determine in real time whether the current driving is safe, whether it is necessary to take measures such as slowing down or avoiding the road, or remind the driver to take over the vehicle in advance to avoid environmental risks and avoid traffic accidents.

S109, sending a takeover warning information, when the environmental risk potential reaches a preset threshold.

In the embodiment of this manual, if the environmental risk potential energy of the target risk point reaches the preset threshold, indicating that there is a collision risk in the current driving environment, the takeover warning information is sent in time to remind the driver to pay attention to the surrounding situation and take over the vehicle in time.

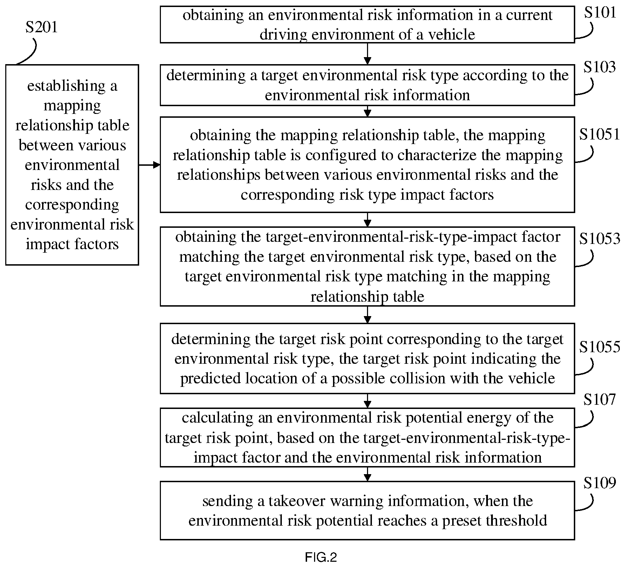

FIG. 2 is a flow diagram of an alternative approach to traffic environmental risk assessment based on an exemplary embodiment. In one possible implementation, as shown in FIG. 2, before the step S105, the method could also include:

S201, establishing a mapping relationship table between various environmental risks and the corresponding environmental risk impact factors.

As an example, environmental risk impact factors corresponding to various environmental risks can be obtained on the basis of big data through data collection and statistics, combined with enough sample collection information. In practical applications, the mapping relationship table of various environmental risks and corresponding environmental risk impact factors can be established in advance through the above or other data acquisition methods.

Accordingly, step S105 may specifically include:

S1051, obtaining the mapping relationship table, the mapping relationship table is configured to characterize the mapping relationships between various environmental risks and the corresponding risk type impact factors;
S1053, obtaining the target-environmental-risk-type-impact factor matching the target environmental risk type, based on the target environmental risk type matching in the mapping relationship table. Preferably, the target risk point can also be determined by the above method, through the correspondence between the environmental risk type and the corresponding risk point. Of course, other risk point determination methods can also be adopted, which will not be described here.

S1055, determining the target risk point corresponding to the target environmental risk type, the target risk point indicating the predicted location of a possible collision with the vehicle.

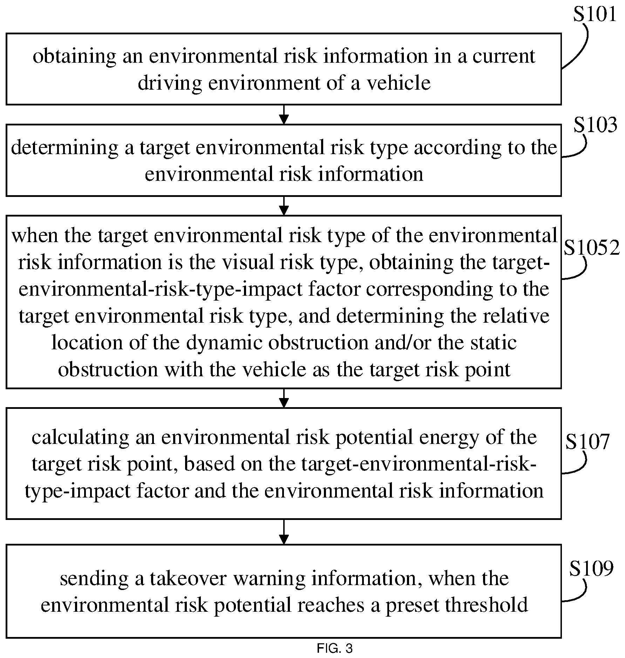

FIG. 3 is flow diagram three of another traffic environmental risk assessment method shown according to an exemplary embodiment. When the target environmental risk type of environmental risk information is the visual risk type, the environmental risk information can include dynamic obstruction information and/or static obstruction information accordingly, then step S105 specifically includes:
S1052, when the target environmental risk type of the environmental risk information is the visual risk type, obtaining the target-environmental-risk-type-impact factor corresponding to the target environmental risk type, and determining the relative location of the dynamic obstruction and/or the static obstruction with the vehicle as the target risk point.

Taking the above example, when the detected environmental risk is pedestrian, the target environmental risk type is determined as the visible risk type, the corresponding target environmental risk type impact factor is obtained, and the relative location of pedestrian and vehicle is determined as the target risk point.

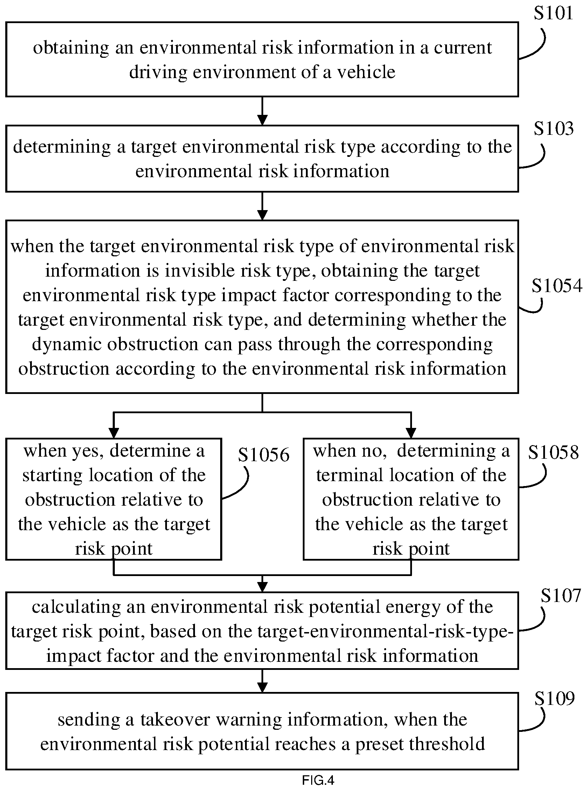

FIG. 4 is a flow diagram four of another traffic environmental risk assessment method shown according to an exemplary embodiment. When the target environmental risk type of environmental risk information is invisible risk type, the environmental risk information correspondingly includes visual blind area information. The blind area indicates an area on a driving path of the vehicle, and may have a risk of collision formed by an obstruction that blocks a driver's field of vision. The target risk point corresponding to the target environmental risk type is determined, then step S105 specifically includes:

S1054, when the target environmental risk type of environmental risk information is invisible risk type, obtaining the target environmental risk type impact factor corresponding to the target environmental risk type, and determining whether the dynamic obstruction can pass through the corresponding obstruction according to the environmental risk information;
S1056, when yes, determine a starting location of the obstruction relative to the vehicle as the target risk point.

For example, the detection device can judge whether it can be passed through according to the size and type of the obstruction. For example, when the obstruction is detected as a bush or a short roadblock, it can be judged that the obstruction can be passed through by dynamic obstructions; when the obstruction is detected as a wall or a higher barricade, it can be judged that the obstruction cannot be passed through by dynamic obstructions. Specifically, the obstruction can be passed through by a dynamic obstruction, either by the obstruction itself, or by a preset area around the obstruction, such as through a gap above or below the obstruction.

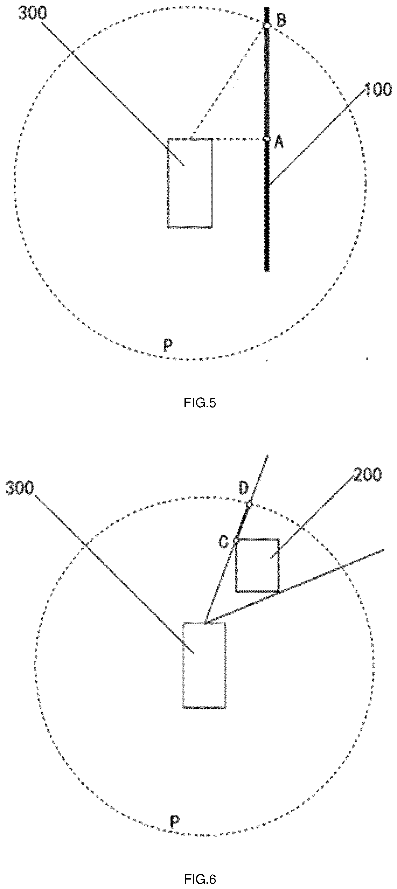

FIG. 5 shows the schematic diagram of the blind area corresponding to the penetrable occlusion, where the area formed by the track P is the range that the detection device can detect. When the penetrable occlusion 100 appears on the driving path of vehicle 300, the blind area of the visual field includes the area where the penetrable occlusion 100 is located. Therefore, the starting point A of the penetrable occlusion 100 relative to the vehicle 300 is identified as the target risk point, and with the driving of the vehicle 300, the traversable obstruction 100 relative to the starting point of the vehicle real-time changes, that is, the scope of the visual field blind area and the target risk point are real-time changes with the movement of the vehicle 300, wherein, the AB segment is the length of the blind zone that the detection device can and needs to continuously monitor.

Accordingly, step S105 also includes:

S1058, when the dynamic obstruction cannot pass through the obstruction, then determining a terminal location of the obstruction relative to the vehicle as the target risk point.

Specifically, the obstruction cannot be passed through by a dynamic obstruction, which can mean that neither the obstruction itself nor the preset area around the obstruction can be passed through by a dynamic obstruction. FIG. 6 shows the schematic diagram of the blind area corresponding to the impenetrable obstructions, in which the area formed by the track P is the range that the detection device can detect. When the impenetrable obstruction 200 appears on the driving path of vehicle 300, the blind area of the visual field does not include the area where the impenetrable obstruction 200 is located. However, a blind spot of visual field may be formed behind the impenetrable obstruction 200 along the driving path of vehicle 300 for the dynamic obstructions to pass through, so only the impenetrable obstruction 200 relative to the vehicle's end location C is taken as the target risk point, wherein the CD segment is the length of the blind spot that the detection device can and needs to continuously monitor.

The above method is configured to determine the target risk points corresponding to the target environmental risk types, so that the scope of environmental risk assessment can cover the visible risks and invisible risks in the entire visual blind area on the vehicle's driving path, such as dynamic obstructions and static obstructions located on the driving path, as well as people, vehicles and animals that may suddenly appear in the blind area. Effectively improve the scope and accuracy of risk assessment.

As an example, in step S107, the environmental risk potential energy of the target risk point is calculated based on the target-environmental-risk-type-impact factor and the environmental risk information, which includes:

S1071, obtaining a relative distance, a relative speed and an angle between the vehicle and the corresponding environmental risk, according to the environmental risk information;

S1072, calculating the environmental risk potential energy of the target risk point, according to the target-environmental-risk-type-impact factor, the relative distance, the relative speed and the angle, wherein an expression of the environmental risk potential energy of the target risk point is as follows:

$$RE_{aj} = f(\vec{r}_{aj}, \vec{v}_{ja}, \theta, M_{type}, k_1, k_2)$$

wherein:

$\vec{r}_{aj}$ represents the relative distance;
$\vec{v}_{ja}$ represents the relative speed;
$\theta$ represents the angle of the $\vec{r}_{aj}$ and $\vec{v}_{ja}$;
$M_{type}$ represents the target-environmental-risk-type-impact factor;
$k_1$ represents a distance impact factor;
$k_2$ represents a speed impact factor.

There is a positive correlation between $M_{type}$ value and $k_2$ value and $RE_{aj}$ value, that is, the larger $M_{type}$ value is, the larger $RE_{aj}$ value is, the larger $k_2$ value is, and the larger $RE_{aj}$ value is. The value of $k_1$ is negatively correlated with the value of $RE_{aj}$, that is, the smaller the value of $k_1$, the larger the value of $RE_{aj}$.

For example, the relative distance, relative speed and Angle between the vehicle and the corresponding environmental risk can be obtained by using the micro-element method, that is, the vehicle and the environmental risk are rasterized, respectively calculating the relative distance, relative speed and Angle of each grid point relative to each grid point of the vehicle. In possible embodiments, both vehicle and environmental risks can also be simplified into an elliptic model to calculate the relative distance, relative velocity, and Angle between each boundary point of the vehicle and each boundary point of the environmental risk. In other possible embodiments, the above micro-element method and elliptic model method can also be combined. For example, the shape of the environmental risk is described by an elliptical model, while the vehicle is still rasterized. The relative distance, relative speed and Angle between each grid point of the vehicle and each boundary point of the environmental risk ellipse can be calculated separately to make the calculation results more accurate. Further accurate assessment of environmental risks.

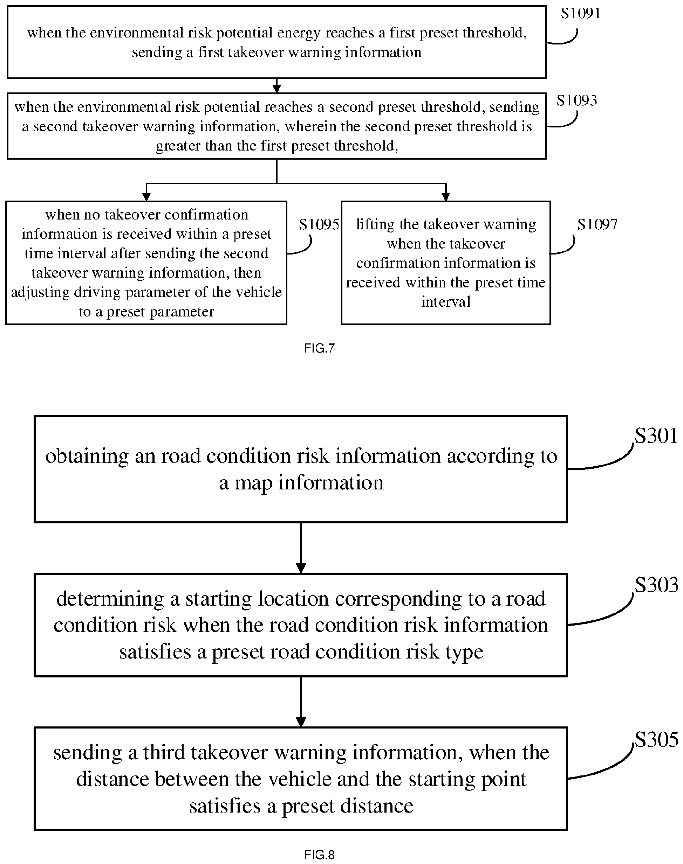

FIG. 7 is a flow diagram of an alternative approach to traffic environmental risk assessment based on an exemplary embodiment. In one possible implementation, as shown in FIG. 7, step S109 could specifically include:

S1091, when the environmental risk potential energy reaches a first preset threshold, sending a first takeover warning information; the first takeover warning information is configured to remind the driver that the vehicle has entered the high risk area, please pay attention to the surrounding situation, and be ready to take over the vehicle;

S1092, when the environmental risk potential reaches a second preset threshold, sending a second takeover warning information, wherein the second preset threshold is greater than the first preset threshold, the second takeover warning information is configured to remind the driver that he must take over the vehicle.

As an example, step S109 also includes:

S1093, when no takeover confirmation information is received within a preset time interval after sending the second takeover warning information, then adjusting driving parameter of the vehicle to a preset parameter. Specifically, the takeover confirmation information represents that the driver has taken over the vehicle, the driving parameters include speed, braking, steering and other parameters, and the adjustment of the formal parameters of the vehicle to the preset parameters include deceleration, braking, detour and other avoidance measures.

Exemplary, step S109 also includes:

S1094, lifting the takeover warning when the takeover confirmation information is received within the preset time interval.

The above multi-level warning method is adopted to send the corresponding takeover warning information to the driver step by step according to the size of risk potential energy, timely remind the driver to pay attention to the surrounding situation and take over the vehicle. Combined with the driver's takeover reaction characteristics, the risk at the takeover time is assessed and the warning is given step by step, so as to ensure the safety of the automatic driving takeover and improve the driver's driving comfort. If the driver does not take over the vehicle in time, the vehicle takes the initiative to slow down, avoid and other measures to avoid the occurrence of traffic accidents and ensure driving safety.

FIG. 8 is a flow diagram of an alternative approach to traffic environmental risk assessment based on an exemplary embodiment. In one possible implementation, as shown in FIG. 8, the method could also include:

S301, obtaining an road condition risk information according to a map information;

S303, determining a starting location corresponding to a road condition risk when the road condition risk information satisfies a preset road condition risk type;

S305, sending a third takeover warning information, when the distance between the vehicle and the starting point satisfies a preset distance, the third warning information is configured to remind the driver that the vehicle is about to enter the high-risk area, please pay attention to the surrounding situation, and be ready to take over the vehicle.

In practical applications, the road condition information can be obtained in real time according to map information. If the road condition risk is detected, such as the road with high accident incidence or congested road ahead of the driving path, the starting point of the road with high accident incidence or congested road can be obtained. When the vehicle enters the road with high accident incidence or congested road, or the distance between the vehicle and the road with high accident incidence or congested road is less than the preset distance, the starting point of the road with high accident incidence or congested road can be obtained. Send takeover warning information to the driver, indicating that at this time has entered or is about to enter a high risk area, please pay attention to the surrounding situation, ready to take over the vehicle. For example, after the third takeover warning information is issued, continue to monitor whether there are environmental risks in the road section with high accident incidence or congested road section. If other environmental risks are detected in the vehicle driving environment, the risk assessment method of S101-S109 in the above steps will be adopted.

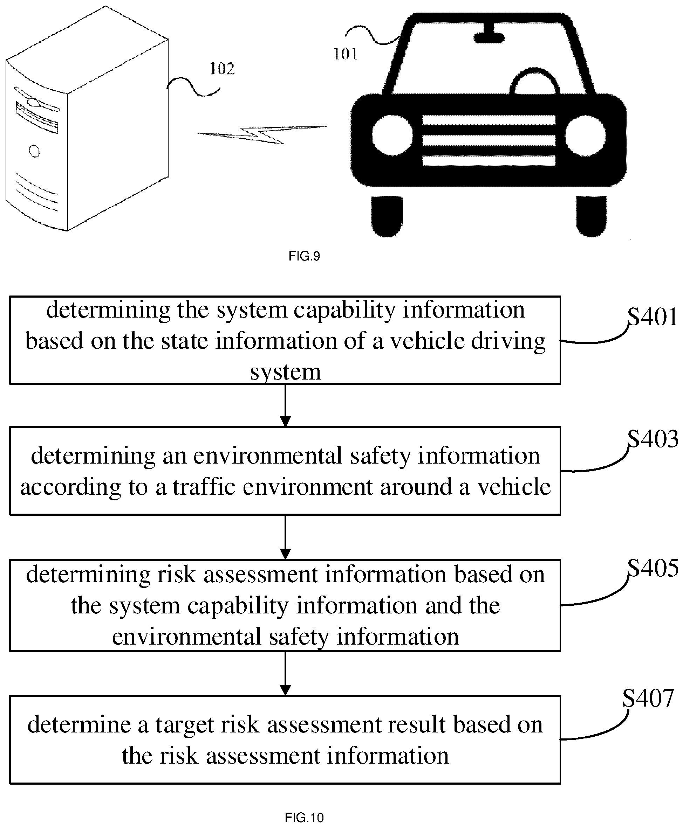

Please refer to FIG. 9, which is a schematic diagram of the application environment of a risk assessment method provided by this application embodiment. The schematic diagram includes vehicle 01 and server 02. In an optional embodiment, server 02 can be a vehicle server set in vehicle 01, which can obtain the desired data in real time, to obtain the results of risk assessment in the future. In another alternative embodiment, the vehicle 01 can have its own on-board server, and the on-board server and the server 02 shown in FIG. 9 are not the same server. After the on-board server transmits the acquired data to the server 02, the server can complete the subsequent steps and finally get the result of risk assessment. The vehicle server involved in the first case and the server involved in the second case are called servers. In another optional embodiment, the server may be an external server, such as one provided by the vehicle manufacturer.

Optionally, a server can be an independent physical server, a server cluster consisting of multiple physical servers, or a distributed system. It can also be a cloud server that provides cloud services, cloud databases, cloud computing, cloud functions, cloud storage, Network services, cloud communications, middleware services, domain name services, security services, CDN (Content Delivery Network), and big data and artificial intelligence platforms and other basic cloud computing services.

Specifically, server 02 can determine the system capability information based on the state information of the driving system of vehicle 01, determine the environmental safety information based on the traffic environment of the vehicle, determine the risk assessment information based on the system capability information and environmental safety information, and determine the target risk assessment results based on the risk assessment information.

FIG. 10 is a schematic diagram of a risk assessment method provided by this application embodiment, as shown in FIG. 10. The method may include:

S401: determining the system capability information based on the state information of a vehicle driving system;

In an optional embodiment, the system capability information may include comprehensive information corresponding to the vehicle's perception and cognitive system state, control system state, and executive system state. The autonomous driving system state can be evaluated by analyzing the natural environmental conditions outside the car, the hardware and software operation conditions in the vehicle, and the driving state of the vehicle. Optionally, the hardware and software operating conditions in the vehicle may include hardware device fault or failure, software system failure to obtain calculation results within a specified time, communication timeout between a software module with a hardware module, etc. Optionally, the vehicle running state may include the vehicle's six-degree-of-freedom speed and acceleration, etc. Optionally, the six-degree-of-freedom of the vehicle is expressed as the vehicle performs a translation along the x axis, a translation along the y axis, a translation along the z axis, a rotation around the x axis, a rotation around the y axis, and a rotation around the z axis.

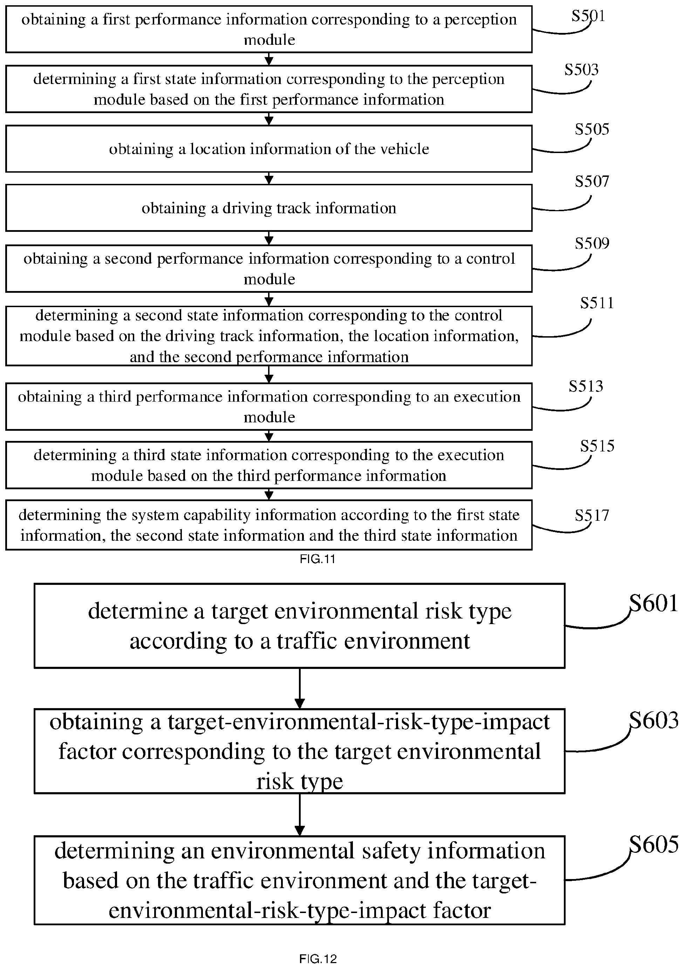

In the embodiments of this application, FIG. 11 is the flow diagram one of a risk assessment method provided by the embodiments of this application. The system capability information is determined according to the state information of the vehicle automatic driving system, as shown in FIG. 11, including the following processes:

S501: obtaining a first performance information corresponding to a perception module;

In an optional embodiment, the perception module can identify the road traffic environment around the vehicle and build a world model of the environment the vehicle is currently in. The perception module needs to rely on various sensors to complete its duties. Currently, the widely used sensors include cameras, the millimeter-wave radar, the ultrasonic radar, the Laser radar and the combined positioning system, etc. The perception module can confirm the surrounding road traffic environment and establish the world model of the current vehicle environment.

In an optional embodiment, the factors affecting the performance of the perception module under the current driving state can be obtained from the limitations of each sensor, such as the current vehicle driving in the tunnel condition, the current vehicle in the rain and snow weather, the current ambient temperature, backlight conditions, etc. The current traffic environment of the vehicle is obtained through the perception module, and the first performance information that affects the performance of the perception module is obtained.

S503: determining a first state information corresponding to the perception module based on the first performance information;

In an alternative embodiment, the influence of the ability of the perception module on some indicators under the influence of various factors is evaluated by means of theoretical analysis or practical testing, to obtain the first state information. Alternatively, the impact on the performance of the current vehicle perception module can be obtained according to the obtained first performance information. By synthesizing the impact on some indicators of the vehicle, such as the location error of the target object, the course angle error of the target object, the velocity error of the target object, the acceleration error of the target object, the end location error of the target object envelope multilateral body, the identification recall rate, and the identification accuracy rate, etc., to determine the first state information of the perception module.

In an alternative embodiment, the indicators can be evaluated using actual tests. Specifically, for example, the vehicle in the test stage can be configured to simulate the situation of the vehicle in rainy days, including the ability of the vehicle perception system to detect the target speed measurement error and other indicators under different rainfall conditions, and the mapping relationship between the external environment and the perception module ability of the vehicle automatic driving system can be obtained through the test data of a large number of different external environmental conditions. The current first perception information obtained by the vehicle is mapped to the impact on the above indicators, and the first state information of the perception module is determined by synthesizing the current impact on all indicators.

In an alternative embodiment, the indicators can be evaluated using a theoretical analysis approach. Optionally, for example, if the current vehicle is in extreme weather conditions, such as a strong typhoon, the impact on various indicators may occur if the wind level or heavy rainfall conditions of the typhoon are not obtained during the test stage, then the test data of other wind forces can be fitted or extended, and the first state information corresponding to the weather conditions can be obtained according to the fitting or extension results.

In an alternative embodiment, the first state information determined according to the appropriate indicators can be the combination, superposition, priority ranking and other operations of the impact of each indicator on the performance of the perception module, which can be combined and superimposed with the same weight, and can also be assigned different weights according to the importance of each indicator to perform the combination, superposition and other operations. Assign a higher weight to the metrics that affect the higher safety of the automated driving.

In an optional embodiment, the first state information may be a specific fractional value, but also a table, curve, functional relationship, state rank, etc.

S505: obtaining a location information of the vehicle;
In one alternative embodiment, the vehicle locates the vehicle through the on-board perception module to obtain the current location information of the vehicle, optionally, the location information can be the coordinates obtained by the Global Positioning System (GPS), including the three-dimensional longitude-latitudinal coordinates. Location information can also include the absolute location of the vehicle as well as its relative location on the road.
S507: obtaining a driving track information;
In one alternative embodiment, the real-time track information output by the planning module of the automatic driving system is obtained, and the main responsibility of the control module is to control the vehicle to track the track information of the vehicle. The deviation of vehicle location and trajectory can be the criterion to evaluate the capability of control system.
S509: obtaining a second performance information corresponding to a control module;
In an alternative embodiment, the second performance information affecting the performance of the control module is obtained. Optionally, for example, the shape of the driving track is a factor affecting the control system, and the shape of the driving track is closely related to the shape of the current road. From the shape of the current road to evaluate the capability of the control system, road curvature and road curvature change rate can be configured to evaluate the capability of the control system.
S511: determining a second state information corresponding to the control module based on the driving track information, the location information, and the second performance information;
In an alternative embodiment, the second performance information is the factor that affects the output of the control quantity of the control module to the vehicle during the current driving. Through appropriate indicators, such as control deviation, control overshooting, control reaction time, etc., the corresponding second state information of the control module can be determined by theoretical analysis or practical testing. Optionally, the control module can output the control quantity according to the shape of the running track, the current vehicle location and the deviation of the track, among which the control quantity includes target acceleration and target steering wheel angle, etc. Through the difference between the output target running track and the actual running track, the control ability of the control module under the current road can be obtained. Thus, the second state information of the control module in the current running is determined.

In an optional embodiment, the second state information determined according to the appropriate indicators can be the superposition of the influence of each indicator on the performance of the control module, such as control deviation, control overshoot, control reaction time, etc. These indicators affecting the capability of the control module can be combined and superimposed with the same weight. Different weights can also be assigned according to the importance of each indicator and then combined, superimposed or other operation, and higher weights can be assigned to indicators that affect the safety of automatic driving.

In one alternative embodiment, the second state information can be specific fractional values, but also tables, curves, functional relationships, state levels, and so on.

S513: obtaining a third performance information corresponding to an execution module.

In an optional embodiment, the main responsibility of the executive module is to implement the control quantity output by the control module, which may optionally include the target acceleration and the target steering wheel, etc. The third performance information corresponding to the execution module can be the execution ability of the execution module to the control output of the control module. Optionally, since the execution module directly addresses the impact of the road surface on the wheel, the factors that affect the ability of the execution module include road adhesion coefficient and slope. Optionally, the execution module sends instructions directly to the actuator, so the failure of the execution module also affects the ability of the execution module.

S515: determining a third state information corresponding to the execution module based on the third performance information.

In an alternative embodiment, the third performance information that affects the capability of the execution module can be obtained, and the determined third state information corresponding to the capability of the module can be perceived by means of theoretical analysis or practical testing according to the appropriate indicator, where the appropriate indicator is the indicator that evaluates the capability of the execution module. Such as acceleration tracking accuracy, speed tracking accuracy, front wheel Angle tracking accuracy, front wheel angle speed tracking accuracy, front wheel torque tracking accuracy, etc. It can be the combination, superposition, priority ranking and other operations of the impact of indicators on the performance of the execution module. These indicators that affect the capability of the control module can be combined and superimposed with the same weight, and different weights can be assigned according to the importance of each indicator to combine and superposition and other operations, and higher weights can be assigned to the indicators that affect the safety of automatic driving.

In an alternative embodiment, the third state information of the execution module may also be the case of the failure of the execution module, such as the failure to send instructions to the actuator at a specified time, thus affecting the performance of the execution module. Optionally, for example, the failure indication of the autopilot system indicates the failure of the execution module.

In one alternative embodiment, the third state information can be specific fractional values, tables, curves, functional relationships, state levels, etc.

S517: determining the system capability information according to the first state information, the second state information and the third state information.

In one alternative embodiment, the first state information, the second state information, and the third state information are evaluated comprehensively to obtain the system capability information. Optionally, the first state information, the second state information and the third state information presuppose the functional relationship, and the first state information, the second state information and the third state information can be combined, superimposed, prioritized and other operations with the same weight. In addition, different weights can be assigned according to the importance of the perception module, control module and execution module to driving safety, and then combined and superimposed, etc., and higher weights can be assigned to the modules that affect the safety of automatic driving.

In one alternative embodiment, the system capability information can be specific fractional values, tables, curves, functional relationships, state levels, etc.

In an optional embodiment, the state of the automatic driving system also includes the state of the vehicle's prediction module, the state of the decision module, the state of the planning module, the state of the human-computer interaction module, etc. The state of prediction module, decision module, planning module, and human-computer interaction module during real-time driving of the current vehicle can be determined in a similar way to the first state information of the perception module mentioned above, and the state information of these modules can be added to the system capability information for comprehensive consideration.

The function of the capability evaluation of the automatic driving system is to evaluate the safety-oriented performance of the automatic driving system in the current environment and the ability to ensure the safety of the vehicle. When the algorithm of the automatic driving system is fully determined, what affects the automatic driving system is the external environment of the system, and the environmental safety information of the traffic environment in which the vehicle is located may have an impact on the driving risk.

S403: determining an environmental safety information according to a traffic environment around a vehicle;

In one alternative embodiment, the environmental safety information may represent the potential risk of the current road traffic environment to the safe driving of the self-contained vehicle, which may pose a threat to the safety of the vehicle. Damage that occurs while a vehicle is in motion can be described as damage caused by a collision, and damage can be configured to describe the severity of a collision. Optionally, damage includes damage to the self-propelled vehicle and the occupants and contents of the self-propelled vehicle, and damage to other participants in the collision. The collision is not a certain occurrence, the severity of the collision is also uncertain, different types of collision probability and collision severity calculation methods are different, and may also be related to the current speed of the vehicle, the mass of the vehicle. Among them, the environmental safety information and the environmental risk information mentioned above can refer to the same thing.

In an optional embodiment, the traffic environment around the vehicle when the vehicle is traveling is obtained, including static and dynamic traffic participants, road obstructions, road condition risks, visual blind areas, etc. Damage to other participants may be caused by collisions with static and dynamic traffic participants and road obstructions. Among them, the dynamic and static traffic participants include motor vehicles, non-motor vehicles, pedestrians and animals in motion. The road obstructions include all obstructions appearing on roads. Such as roadblocks, construction areas, traffic lights, isolation belts, guardrail, road potholes, road water, other vehicles fell goods. The damage caused by the collision with other participants can be caused by the vehicle entering the no-go area, which can be the no-go area of the vehicle, such as all the areas around the road that the vehicle cannot drive, including flower beds, sidewalks with roadside stones, buildings, rivers, cliffs, mountains, viaducts outside the area causing the vehicle to fall.

In an optional embodiment, the traffic environment around the vehicle can be acquired through the perception module. Specifically, the vehicle's camera, radar, sensors and other detection devices as well as high-precision map or navigation system carry out real-time monitoring of the surrounding environment of the vehicle, so as to obtain the traffic environment around the vehicle under the current driving condition in real time. Optionally, for example, when an obstruction that may pose a threat to vehicle safety is detected, the traffic environment corresponding to the dynamic obstruction is obtained in real time, including the relative distance between the obstruction and the vehicle, the relative speed, the shape and type of the obstruction, etc. Optionally, for example, to obtain the current road condition risk, the navigation system can obtain the road condition risk such as the road section with high accident incidence or congested road section in front of the vehicle's driving path according to the on-board map, and obtain the starting point location corresponding to the road condition risk and the relative distance between the road condition risk and the vehicle in real time. Optionally, for example, when the visual field blind area with possible collision risk formed by the obstruction that obstructs the driver's visual field on the vehicle's driving path is detected, the relative distance between the obstruction and the vehicle, the size and type of the obstruction corresponding to the visual field blind area, and the scope of the blind area are obtained in real time.

In the embodiments of this application, FIG. 12 is the flow diagram two of a risk assessment method provided by the embodiments of this application, as shown in FIG. 12:

S601: determine a target environmental risk type according to a traffic environment;

In one alternative embodiment, the target environmental risk type is the type of risk that corresponds to the detected traffic environment around the current vehicle. Optionally, according to the acquired traffic environment, the risk targets are divided into different types, such as the above-mentioned dynamic and static traffic participants, road obstructions, visual blind areas, road conditions and other risk types. It can also be divided into a first-level risk type, a second-level risk type, and a third-level risk type according to the emergency state or severity level information of an environmental risk information. A variety of classification methods can also be combined, superimposed, prioritized and other operations to achieve a comprehensive and accurate assessment of risks, and minimize the potential risks faced by vehicles. By classifying various traffic environmental risks, the target environmental risk types are determined according to the obtained environmental risk information in the vehicle's current driving environment, so as to judge and deal with different types of environmental risks, so as to achieve a comprehensive and accurate assessment of traffic environmental risks.

S603: obtaining a target-environmental-risk-type-impact factor corresponding to the target environmental risk type;

In an alternative embodiment, there should be different environmental risk type impact factors for different types of environmental risk, which are related to the type of potential environmental risk, the size of the obstruction, the speed of the vehicle, and the relative distance between the vehicle and the environmental risk. Alternatively, the target-environmental-risk type-impact factor can be the severity of the collision, and the collision risk can be defined as the product of the collision probability and the severity of the collision, that is, collision risk = collision probability $\times$ severity. The higher the collision risk, the higher the traffic safety score, and the collision probability and collision severity of different types of target environmental risks are different. The environmental risks of different target environmental risk types may be related to the collision of vehicles in different locations and in different ways, and there should be different risk points, which may refer to the predicted location of the collision with the vehicle.

In an alternative embodiment, for example, if a vehicle collides with other traffic participants, the collision risk of an autonomous vehicle and a cluster of other traffic participants can be calculated by means of a functional relationship based on the number of obstructions, the degree of aggregation, and the exercisable area of the vehicle. Optionally, the same type of traffic participant group with similar location and vector speed is defined as other traffic participant cluster, and the average relative distance of traffic participants in the traffic participant cluster is configured to describe the aggregation degree of obstructions. The greater the number of obstructions, the more discrete the aggregation degree, and the closer they are to vehicles, the larger the road area they occupy. The greater the probability of collision with this traffic participant cluster. The collision severity is related to the typical mass of the cluster, the average speed vector of the cluster, the speed vector of the vehicle and the mass of the vehicle. The larger the typical mass of the cluster and the mass of the vehicle, the larger the gap between the average speed vector of the cluster and the speed vector of the vehicle, and the higher the severity. Optionally, if the vehicle collides with road facilities and other static obstructions, the collision probability is only related to the area occupied by the obstruction and the area proportion of the passable area. The larger the area proportion, the higher the collision probability. The severity of the collision is related to the type of obstruction and the speed of the vehicle.

In one alternative embodiment, for example, if a vehicle drives into an impassable area, the collision risk may be determined by means of a function calculation, or a ratio of the probability of driving into a particular type of impassable area to the length of the overall boundary of the passable area occupied by the length of the boundary dividing the passable area and the impassable area, or the distance of the vehicle to the boundary. The higher the proportion of boundary length and the closer the distance between vehicles, the greater the probability of entering the impassable area. The severity of the collision is related to the loss caused by the collision, in which the loss of the vehicle entering the impassable area is related to the type of the impassable area.

S605: determining an environmental safety information based on the traffic environment and the target-environmental-risk-type-impact factor.

In an alternative embodiment, when the target environmental risk type is determined, the corresponding target-environmental-risk-type-impact factor is obtained according to the target environmental risk type, where the target risk point corresponding to the target environmental risk type can be determined, and the corresponding environmental risk type impact factor and risk point are determined for different types of environmental risk. So as to realize the targeted treatment of different types of environmental risks, and it is conducive to the comprehensive and accurate assessment of traffic environmental risks.

In an alternative embodiment, it is also possible to establish a mathematical model of environmental risk for environmental risk, calculate the environmental risk potential energy, use the environmental risk potential energy to evaluate the magnitude of environmental risk and determine environmental safety information.

S405: determining risk assessment information based on the system capability information and the environmental safety information;

In one alternative embodiment, the system capability information and environmental safety information are comprehensively evaluated to obtain the risk assessment information. Optionally, the system capability information and environmental safety information are combined and superimposed with the same weight, and different weights can be assigned according to the importance of the two and then combined and superimposed. Assign a higher weight to the metrics that affect the higher safety of automated driving. The functional relationship between the two can be preset, and the risk assessment information can be a specific score value, or it can be a table, curve, function relationship, state level, including system capability information and environmental safety information.

S407: determine a target risk assessment result based on the risk assessment information.

In one alternative embodiment, the target risk assessment result is determined as the output value from the risk assessment information obtained from the integrated assessment of system capability information and environmental safety information. Alternatively, when the risk assessment information establishes a functional relationship between system capability information and environmental safety information, for example, the risk assessment information = the system capability information - the environmental safety information, that is, the function of subtracting the fractional values of the two, a certain output value is obtained for the current driving risk as the target risk assessment result.

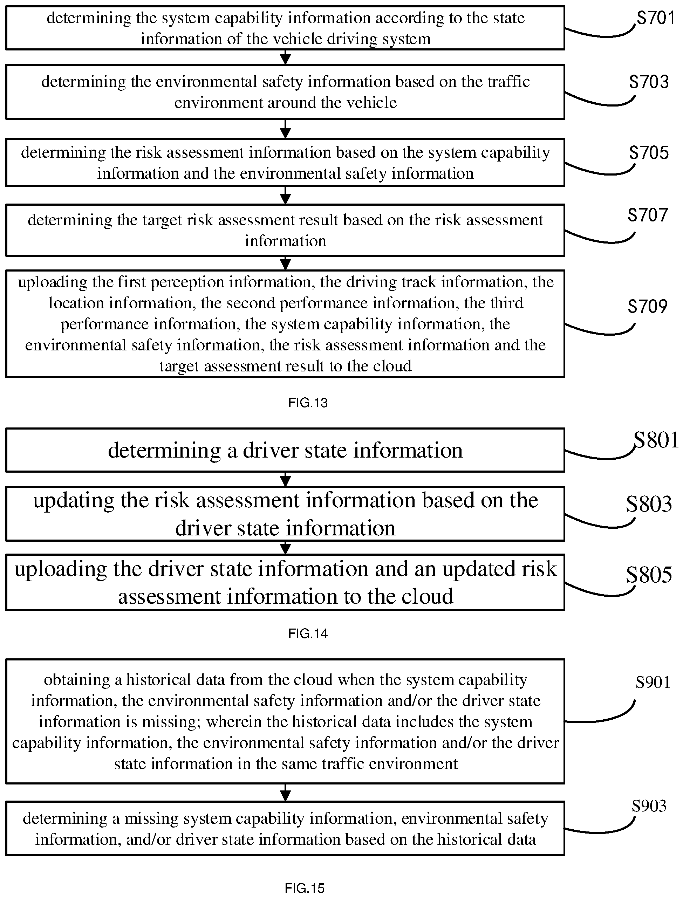

In one optional implementation, data from a vehicle's autonomous driving system could interact with the cloud. FIG. 13 is the flow diagram three of a risk assessment method provided by the embodiment of this application. The risk assessment method of the invention also includes:

S701: determining the system capability information according to the state information of the vehicle driving system;

S703: determining the environmental safety information based on the traffic environment around the vehicle;

S705: determining the risk assessment information based on the system capability information and the environmental safety information;

S707: determining the target risk assessment result based on the risk assessment information.

For a detailed explanation of steps S701-S707, see steps S401-S407.

S709: uploading the first perception information, the driving track information, the location information, the second performance information, the third performance information, the system capability information, the environmental safety information, the risk assessment information and the target assessment result to the cloud.

In an optional implementation, data used for risk assessment is exchanged with the cloud. The original data entered into the risk assessment system that can be collected at present, including the first perception information, the second performance information, the third performance information, the vehicle location information, the driving track information, etc., as well as the system capability information, the environmental safety information, the risk assessment information and the target risk assessment results, can be uploaded to the cloud for data statistics, and can also be used for reference data of other vehicles as well as backup data.

In an optional implementation, the state of the driver at the time of the current drive may also have an impact on the risk of autonomous driving. Determine the state information of the driver, and according to the state information of the current driver, it can be configured to determine whether the participation of the driver needs to be improved.

FIG. 14 is the flow diagram four of a risk assessment method provided by the embodiment of this application. As shown in FIG. 14, the risk assessment method of the invention also includes:

S801: determining a driver state information;

In one alternative embodiment, the driver's current state includes the driver's attention to observing the vehicle's surroundings, the driver's attention to observing the operating state of the automated driving system, the driver's workload, and the driver's type.

In an optional embodiment, the driver state information is determined, specifically, the autopilot system can be implemented to monitor the driver's attention to observe the vehicle's surrounding environment and the driver's attention to observe the operating state of the autopilot system. The automatic driving system can judge the driver's workload according to the vehicle's driving time and other data, and can distinguish the driver type according to the current driver's operating habits. Optionally, the operating habits include the habits of operating the accelerator, brake, steering wheel, etc., and the driver type can be distinguished according to different operating habits, such as conservative, stable, aggressive, etc.

In an alternative embodiment, the current driver state can be comprehensively evaluated according to the factors affecting the driver state, which can be the combination, superposition, priority ordering and other operations of the factors affecting the driver state, which can be combined and superimposed with the same weight. In addition, different weights can be assigned according to the importance of each indicator and then combined, superimposed and other operations, and higher weights can be assigned to indicators that have a higher impact on the safety of automatic driving to obtain driver state information.

S803: updating the risk assessment information based on the driver state information;
In an optional implementation, driver state information is added, system capability information and environmental safety information are comprehensively evaluated, and updated risk assessment information is obtained. Optionally, for example, the functional relationship between the three can be preset, or the three can be superimposed and combined with corresponding weights to obtain updated risk assessment information. The updated risk assessment information can be specific score values or corresponding grades, and the corresponding target risk assessment results will also be updated.

S805: uploading the driver state information and an updated risk assessment information to the cloud.

In one alternative implementation, driver state information and updated risk assessment information can be uploaded to the cloud for statistical purposes, as backup data for the vehicle, and as reference data for other vehicles. The data transmitted by the vehicle system to the cloud includes all the data obtained for determining system capability information, environmental safety information, driver state information and calculation results. The data transmitted by the cloud system to the vehicle system is the historical statistical information of the above data.

In one of the optional embodiments, the vehicle autonomous driving system can obtain data from the cloud. FIG. 15 is the flow diagram five of a risk assessment method provided by this application embodiment, as shown in FIG. 15:
In one optional embodiment, the cloud includes the driving record of the vehicle with system capability information, the driver state information, and the environmental safety information, as well as the driving record of other vehicles with the three types information, the driving record of the current driver, and the driving record of other drivers.

S901: obtaining a historical data from the cloud when the system capability information, the environmental safety information and/or the driver state information is missing; wherein the historical data includes the system capability information, the environmental safety information and/or the driver state information in the same traffic environment;
S903: determining a missing system capability information, environmental safety information, and/or driver state information based on the historical data.

In one alternative embodiment, when any one or two of the three assessment data - the environmental safety information, the driver state information, the system capability information - are missing, the missing data can be replaced with historical data, or the missing data can be estimated based on historical data, where the historical data can be downloaded from the cloud. Using data from historical data that is the same or similar to the current traffic environment, such as available data that is more recent to the current time, can supplement the missing part of the data to achieve risk assessment.

In an alternative embodiment, where the current traffic environment may present a situation where there is no safety risk, the risk assessment can be made using only the system capability information and the driver state information.

In an alternative embodiment, the risk assessment can also be performed only from the acquired data, such as natural environmental conditions, when one or two of the three assessment data, such as the environmental safety information, the driver state information, and the system capability information, are missing.

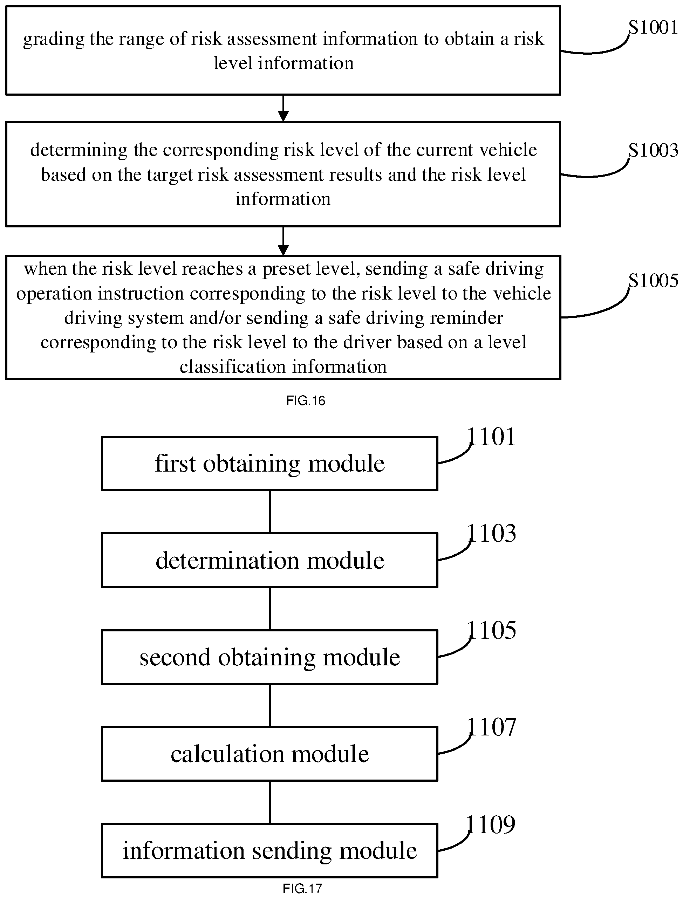

After determining the target risk assessment result according to the risk assessment information, the corresponding risk level can also be determined, according to which the vehicle can perform the corresponding operation to reduce the driving risk. FIG. 16 is the flow diagram six of a risk assessment method provided by the embodiment of this application, as shown in FIG. 16:

S1001: grading the range of risk assessment information to obtain a risk level information;

In one alternative embodiment, the risk level information can be a graph, including multiple risk levels, which can be represented by numbers, letters, Chinese characters, etc.

S1003: determining the corresponding risk level of the current vehicle based on the target risk assessment results and the risk level information;

In one alternative embodiment, the current risk level corresponding to the target risk assessment result is obtained by comparing the target risk assessment result with the risk rating information.

S1005: when the risk level reaches a preset level, sending a safe driving operation instruction corresponding to the risk level to the vehicle driving system and/or sending a safe driving reminder corresponding to the risk level to the driver based on a level classification information.

In an optional embodiment, the operations corresponding to the risk level may be those that improve the reliability of the automated driving system, those that increase the degree of driver participation in the driving task, and those that reduce the traffic risk to the system. In one alternative implementation, information on the operational instructions and alerts to the driver used by autonomous driving to improve safety is uploaded to the cloud.

In an optional embodiment, the operations that can improve the reliability of the autonomous driving system can be software reboot, hardware reboot, vehicle light activation, sensor cleaning, and wiper activation.

In an optional embodiment, the operations that can enhance the driver's participation in the driving task can be one of steering wheel vibration, seat vibration, seat belt warning, voice or warning tone reminder, human-computer interaction interface reminder, interior light reminder, small lateral reciprocating movement of the vehicle, the small acceleration and deceleration of the vehicle.

In an alternative embodiment, the operations that reduce the traffic risk to the system can be to enter the minimal risk state, restrict the vehicle state, and interact with other traffic participants. Among them, the restricted vehicle state can be the maximum speed of the vehicle, the limit longitudinal acceleration, the limit lateral acceleration, etc., and the interaction with other traffic participants can be the near and far light switch, the horn, the voice outside the car, the dot matrix screen outside the car, etc.

In an optional embodiment, the above three operations corresponding to the risk level can be activated with a certain priority to perform the operation, or can be activated at the same time. The vehicle can perform corresponding operations according to different risk levels. Optionally, for example, if the current risk level is level 2, the vehicle can perform some operations to improve the reliability of the automatic driving system and some operations to reduce the traffic risks faced by the system. If the current risk level corresponds to level 4, the vehicle can perform all the operations that can improve the reliability of the automatic driving system and reduce the traffic risks faced by the system, improve the safety of the automatic driving, and improve the user experience.

In an optional embodiment, a safe driving reminder corresponding to the level of risk can also be issued to the driver. Optionally, for example, if the current risk level is the highest level, the driver can be reminded to drive safely. The driver can be reminded to manually take over the vehicle according to the current highest risk level, and the driver can be reminded to perform operations that can reduce traffic risks after the manual takeover, such as reducing the speed, interacting with other traffic participants, and emergency braking.

By adopting the risk assessment method provided by the application example, considering the fluctuation of the automatic driving system in the actual driving state, the external environment, including weather, illumination, location, road curvature, road slope and adhesion coefficient, will affect the control ability of the automatic driving system on the vehicle, thus resulting in the same road traffic situation. The automatic driving system may fail to achieve safe driving. Through real-time analysis of the capabilities of the automatic driving system and the risks existing in the current road traffic situation, the two are comprehensively evaluated to achieve real-time dynamic driving risk calculation and ensure the authenticity and reliability of the current risk information obtained.

By increasing the evaluation of driver state information, the expected driver state is evaluated, and the driver can be ensured to participate in the driving operation in time according to the actual driving risk, allowing the dynamic change of driver state and improving the user experience;

According to the obtained risk assessment results, the risk level is divided, and the operation conducive to driving safety is carried out according to the corresponding risk level, so as to avoid environmental risks, avoid traffic accidents, and improve the safety of vehicles with automatic driving system.

The system capability information is determined according to the state information of the vehicle driving system, environmental safety information is determined according to the traffic environment around the vehicle, risk assessment information is determined based on system capability information and environmental safety information, target risk assessment results are determined according to the risk assessment information, and the corresponding current driving risk level is obtained based on this information. In this way, it can determine whether the current driving is safe in real time, whether it is necessary to take measures such as slowing down or avoiding the way, or remind the driver to take over the vehicle in advance, so that the vehicle can perform corresponding operations, avoid environmental risks, avoid traffic accidents, and ensure the driving safety of the autonomous vehicle.

FIG. 17 is a block diagram of a traffic environmental risk assessment device based on an exemplary embodiment. Referring to FIG. 17, the device may include:

a first obtaining module 1101, configured to obtain an environmental risk information in a current driving environment of a vehicle.

a determination module 1103, configured to determine a target environmental risk type based on the environmental risk information;

a second obtaining module 1105, configured to obtain a target-environmental-risk-type-impact factor corresponding to the target environmental risk type, and determine a target risk point corresponding to the target environmental risk type, the target risk point indicating a predicted location that may collide with the vehicle;

a calculation module 1107, configured to calculate an environmental risk potential energy of the target risk point, based on the target-environmental-risk-type-impact factor and the environmental risk information;

an information sending module 1109, configured to send a takeover warning information, when the environmental risk potential reaches a preset threshold.

In one possible implementation, the device may also include:

a mapping relationship table establishment module, configured to establish the mapping relationship table of various environmental risks and the corresponding environmental risk impact factors.

Accordingly, the second obtaining module 1105 may also include:

a first obtaining unit, configured to obtain the mapping relationship table, which is configured to represent the mapping relationship between various environmental risks and the corresponding risk type impact factors;

a matching unit, configured to match the target environmental risk type in the mapping relationship table based on the target environmental risk type to obtain the target-environmental-risk-type-impact factor matching the target environmental risk type.

In one possible implementation, when the target environmental risk type of the environmental risk information is the visual risk type, the environmental risk information may, accordingly, include a dynamic obstruction information and/or a static obstruction information, and the second obtaining module 1105 may also include: a first determination unit, configured to obtain the target-environmental-risk-type-impact factor corresponding to the target environmental risk type of the target environmental risk type when the target environmental risk type of the environmental risk information is the visual risk type, and determine the relative location of the dynamic obstruction and/or static obstruction with the vehicle as the target risk point.

In one possible implementation, when the target environmental risk type of the environmental risk information is the invisible risk type, the environmental risk information correspondingly includes the visual blind area information, and the second obtaining module 1105 may also include:

a determining unit, configured to obtain the target-environmental-risk-type-impact factor corresponding to the target environmental risk type, and judge whether the corresponding obstruction can be passed through the dynamic obstruction according to the environmental risk information when the target environmental risk type of the environmental risk information is an invisible risk type;

a second determination unit, configured to determine the starting point of the obstruction relative to the vehicle as the target risk point when the obstruction is capable of being passed through by the dynamic obstruction.

a third determination unit, configured to determine the terminal location of the obstruction relative to the vehicle as the target risk point when the obstruction is not capable of being passed through by a dynamic obstruction.

In one possible implementation, the information sending module 1109 could also include:

a first sending unit, configured to send the first takeover warning information if the environmental risk potential energy reaches the first preset threshold;

a second sending unit, configured to send the second takeover warning information if the environmental risk potential energy reaches the second preset threshold, where the second preset threshold is greater than the first preset threshold;

an adjustment unit, configured to adjust the driving parameters of the vehicle to the preset parameters if the takeover confirmation information is not received within the preset time interval after sending the second takeover warning information;

The decontaminating unit is configured to decontaminating the decontaminating alert if the decontaminating confirmation message is received within the preset time interval.

In one possible implementation, the device may also include:

a third obtaining module, configured to obtain road condition risk information according to map information;

The location module is configured to determine the starting point of the corresponding road condition risk when the road condition risk information meets the preset road condition risk type.

Accordingly, the information sending module 1109 also includes:

a third sending unit, configured to send a third warning information when the distance between the vehicle and the starting location meets the preset distance.

With respect to the device in the above embodiments, the specific manner in which each module performs an operation has been described in detail in the embodiments relating to the method and will not be elaborated herein.

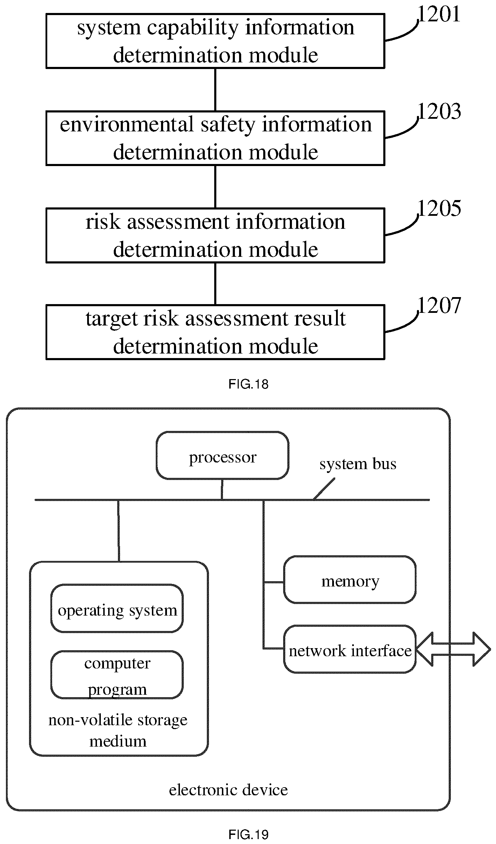

FIG. 18 is a block diagram of a traffic environmental risk assessment device based on an exemplary embodiment. Referring to FIG. 18, the device may include:

a system capability information determination module 1201, configured to determine a system capability information according to a state information of a vehicle driving system;

an environmental safety information determination module 1203, configured to determine an environmental safety information according to a traffic environment around a vehicle;

a risk assessment information determination module 1205, configured to determine a risk assessment information based on the system capability information and the environmental safety information;

a target risk assessment result determination module 1207, configured to determine a target risk assessment result based on the risk assessment information.

In an optional embodiment, the system capability information determination module 1201 includes:

a second obtaining unit, configured to obtain a first perception information corresponding to a perception module;

a fourth determination unit, configured to determine a first state information corresponding to the perception module based on the first perception information;

a third obtaining unit, configured to obtain the location information of the vehicle;

a fourth obtaining unit, configured to obtain a driving track information;

a fifth obtaining unit, configured to obtain a second performance information corresponding to the control module;

a fifth determination unit, configured to determine a second state information corresponding to the control module based on the driving track information, location information and the second performance information.

a sixth obtaining unit, configured to obtain a third performance information corresponding to an execution module;

a sixth determination unit, configured to determine a third state information corresponding to the execution module based on the third performance information;

a seventh determination unit, configured to determine the system capability information based on the first state information, the second state information and the third state information.

In an optional embodiment, the environmental safety information determination module 1203 includes:

an eighth determination unit, configured to determine the target environmental risk type according to the traffic environment;

a seventh obtaining unit, configured to obtain the target-environmental-risk type-impact factor corresponding to the target environmental risk type;

a ninth determination unit, configured to determine environmental safety information based on the traffic environment and the target-environmental-risk-type-impact factors.

In an optional embodiment, the risk assessment device also includes:

a data transmission module, configured to upload the first perception information, the driving track information, the location information, the second energy information, the third performance information, the system capability information, the environmental safety information, the risk assessment information and the target assessment results to the cloud.

In an optional embodiment, the risk assessment device also includes:

a driver state determination module, configured to determine a driver state information;

a risk assessment information updating module, configured to update the risk assessment information based on the driver state information;

a data transmission module, configured to uploading the driver state information and an updated risk assessment information to the cloud.

In an optional embodiment, the risk assessment device also includes:

a historical data obtaining module, configured to obtain a historical data from the cloud in case of missing the system capability information, the environmental safety information and/or the driver state information; the historical data includes the system capability information, the environmental safety information and/or the driver state information in the same traffic environment;

a missing data determination module, configured to determine a missing system capability information, environmental safety information and/or driver state information based on the historical data.

In an optional embodiment, the risk assessment device also includes:

a risk level information determination module, configured to classify the scope of risk assessment information and obtain the risk level information;

a risk level determination module, configured to determine the corresponding risk level of the current vehicle based on the target risk assessment results and the risk level information;

a safe driving operation instruction sending module, configured to send a safe driving operation instruction corresponding to the risk level to the vehicle driving system and/or send a safe driving reminder corresponding to the risk level to the driver based on a level classification information when the risk level reaches a preset level.

With respect to the device in the above embodiments, the specific manner in which each module performs an operation has been described in detail in the embodiments relating to the method and will not be elaborated herein.

FIG. 19 is a block diagram of an electronic device used for traffic environmental risk assessment, which may be a server, and its internal structure diagram may be shown in FIG. 19, according to an exemplary embodiment. The electronic device includes a processor, a memory and a network interface connected via a system bus. Among them, the processor of the electronic device is configured to provide computing and control capabilities. The memory of the electronic device comprises a non-volatile storage medium and an internal memory. The non-volatile storage medium stores an operating system and a computer program. The internal memory provides an environment for the operation of operating systems and computer programs in non-volatile storage media. The network interface of the electronic device is configured to communicate with an external terminal through a network connection. The computer program is executed by the processor to implement a method of risk assessment of traffic environment.

It may be understood by those skilled in the art that the structure shown in FIG. 19 is only a block diagram of a portion of the structure associated with the disclosure scheme and does not constitute a limitation of the electronic equipment to which the disclosure Scheme is applied, which may include more or fewer parts than shown, or combine certain parts, or have a different arrangement of parts.

In the exemplary embodiment, an electronic device is also provided, including: a processor; a memory for storing the processor's executable instructions; the processor is configured to execute the instruction to implement a traffic environment risk assessment method such as the one in this disclosed embodiment.

In an exemplary embodiment, a computer-readable storage medium is also provided which, when the instructions in the computer-readable storage medium are executed by a processor of an electronic device, enables the electronic device to perform the traffic environment risk assessment method in the present disclosed embodiment. Computer readable storage media can be ROM, random access memory (RAM), CD-ROM, magnetic tape, floppy disk and optical data storage devices.

In the exemplary embodiment, a computer program product containing instructions, when run on a computer, is also provided to cause the computer to perform a traffic environmental risk assessment in the disclosed embodiment.

A person of ordinary skill in the art may understand that all or part of the process of implementing the above embodiments methods may be accomplished by instructing the relevant hardware through a computer program that may be stored in a non-volatile computer readable storage medium and that the computer program, when executed, may include a process such as that of the embodiments of the above methods. Any references to memory, storage, databases or other media used in the embodiments provided herein may include non-volatile and/or volatile memory. Non-volatile memory may include read-only memory(ROM), programmable ROM(PROM), electrically programmable ROM(EPROM), electrically erasable programmable ROM(EEPROM), or flash memory. Volatile memory may include random access memory(RAM) or external cache memory. As an illustration rather than a limitation, RAM is available in many forms, Such as static RAM(SRAM), dynamic RAM(DRAM), synchronous DRAM (SDRAM), dual data rate SDRAM(DDRSDRAM), enhanced SDRAM (ESDRAM), Synchlink DRAM(SLDRAM), memory bus (Rambus) direct RAM(RDRAM), direct memory bus dynamic RAM(DRDRAM), and memory bus dynamic RAM(RDRAM).

The traffic environmental risk assessment method, device, electronic device and storage medium provided by the invention firstly obtain the environmental risk information of the vehicle in the current driving environment, then determine the target environmental risk type, determine the target-environmental-risk type-impact factor and the target risk point according to the target environmental risk type, and then calculate the environmental risk potential energy of the target risk point. The environmental risk potential energy is configured to judge whether the current driving is safe, so that the takeover warning information can be sent in time to remind the driver. The above traffic environmental risk assessment method is simple and easy to implement, and through targeted judgment and treatment of different types of traffic environmental risks, it can accurately infer the risk points corresponding to different types of traffic environmental risks, and then assess the size of environmental risks. The scope of risk assessment can cover all visible risks and invisible risks on the vehicle's driving path. It can comprehensively and accurately assess a variety of potential traffic environmental risks to cope with the dangers brought by different types of traffic environmental risks, effectively improve the scope and accuracy of risk assessment, and further reduce safety hazards.

A person skilled in the art, after considering the specification and practicing the invention disclosed herein, will readily think of other embodiments of the disclosure. This application is intended to cover any variation, use, or adaptation of the disclosure that follows the general principles of the disclosure and includes common knowledge or customary technical means in the field of technology that are not disclosed in the disclosure. The specifications and embodiments are to be considered exemplary only, and the true scope and spirit of this disclosure are indicated by the claims below.

It should be understood that this disclosure is not limited to the precise structure already described above and shown in the attached drawings, and that various modifications and changes may be made without deviating from its scope. The scope of this disclosure is limited only by the attached claims.

**Claims**

1. A traffic environment risk assessment method, **characterized in that**, comprising:

    obtaining an environmental risk information in a current driving environment of a vehicle;
    determining a target environmental risk type according to the environmental risk information;
    obtaining a target-environmental-risk-type-impact factor corresponding to the target environmental risk type, and
    determining a target risk point corresponding to the target environmental risk type, the target risk point indicating a predicted location that may collide with the vehicle;
    calculating an environmental risk potential energy of the target risk point, based on the target-environmental-risk-type-impact factor and the environmental risk information;
    sending a takeover warning information, when the environmental risk potential reaches a preset threshold.

2. The traffic environmental risk assessment method according to claim **1, characterized in that**, the target environmental risk type of the environmental risk information comprises a visual risk type, and correspondingly, the environmental risk information comprises a dynamic obstruction information and/or static obstruction information, then determining the target risk point corresponding to the target environmental risk type, comprises:
determining a location of a dynamic obstruction and/or a static obstruction relative to the vehicle as the target risk point.

3. The traffic environment risk assessment method according to claim **1, characterized in that**, the target environmental risk type of the environmental risk information comprises an invisible risk type, and correspondingly, the environmental risk information comprises a blind area information, and the blind area indicates an area on a driving path of the vehicle, and may have a risk of collision formed by an obstruction that blocks a driver's field of vision, the determining the target risk point corresponding to the target environmental risk type, comprises:

    determining whether the dynamic obstruction can pass through the corresponding obstruction according to the blind area information;
    when yes, then determine a starting location of the obstruction relative to the vehicle as the target risk point.

4. The traffic environment risk assessment method according to claim **3, characterized in that**, the method also comprises:
when the dynamic obstruction cannot pass through the obstruction, then determining a terminal location of the obstruction relative to the vehicle as the target risk point.

5. The traffic environment risk assessment method according to claim **1, characterized in that**, calculating the environmental risk potential energy of the target risk point, based on the target-environmental-risk-type-impact factor and the environmental risk information comprises:

    obtaining a relative distance, a relative speed and an angle between the vehicle and the corresponding environmental risk, according to the environmental risk information;
    calculating the environmental risk potential energy of the target risk point, according to the target-environmental-risk-type-impact factor, the relative distance, the relative speed and the angle, wherein an expression of the environmental risk potential energy of the target risk point is as follows:

$$RE_{aj} = f(\vec{r}_{aj}, \vec{v}_{ja}, \theta, M_{type}, k_1, k_2)$$

wherein:

$\vec{r}_{aj}$ represents the relative distance;
$\vec{v}_{ja}$ represents the relative speed;
$\theta$ represents the angle of the $\vec{r}_{aj}$ and $\vec{v}_{ja}$;
$M_{type}$ represents the target-environmental-risk-type-impact factor;
$k_1$ represents a distance impact factor;
$k_2$ represents a speed impact factor.

6. The traffic environment risk assessment method according to claim 1, **characterized in that**, sending the takeover warning information, when the environmental risk potential reaches the preset threshold, comprises:

when the environmental risk potential energy reaches a first preset threshold, sending a first takeover warning information;
when the environmental risk potential reaches a second preset threshold, sending a second takeover warning information, wherein the second preset threshold is greater than the first preset threshold;
when no takeover confirmation information is received within a preset time interval after sending the second takeover warning information, then adjusting driving parameter of the vehicle to a preset parameter.

7. The traffic environment risk assessment method according to claim 1, **characterized in that**, the method further comprises:

obtaining a road condition risk information based on a map information;
determining a starting location corresponding to a road condition risk when the road condition risk information satisfies a preset road condition risk type;
sending a third takeover warning information, when the distance between the vehicle and the starting point satisfies a preset distance.

8. A risk assessment method, **characterized in that**, comprises:

determining a system capability information based on a state information of a vehicle driving system;
determining an environmental safety information according to a traffic environment around a vehicle;
determining a risk assessment information based on the system capability information and the environmental safety information;
determining a target risk assessment result according to the risk assessment information.

9. The risk assessment method according to claim **8, characterized in that**, determining the system capability information based on the state information of the vehicle driving system comprises:

obtaining a first performance information corresponding to a perception module;
determining a first state information corresponding to the perception module based on the first performance information;
obtaining a location information of the vehicle;
obtaining a driving track information;
obtaining a second performance information corresponding to a control module;
determining a second state information corresponding to the control module based on the driving track information,
the location information, and the second performance information;
obtaining a third performance information corresponding to an execution module;
determining a third state information corresponding to the execution module based on the third performance information;
determining the system capability information according to the first state information, the second state information and the third state information.

10. The risk assessment method according to claim **8, characterized in that**, determining the environmental safety information according to the traffic environment around the vehicle, comprises:

determining a target environmental risk type according to the traffic environment;
obtaining a target-environmental-risk-type-impact factor corresponding to the target environmental risk type;
determining the environmental safety information according to the traffic environment and the target-environmental-risk-type-impact factor.

11. The risk assessment method according to claim **9, characterized in that**, further comprises:
uploading the first performance information, the driving track information, the location information, the second performance information, the third performance information, the system capability information, the environmental safety information, and the risk assessment information and the target assessment result to the cloud.

12. The risk assessment method according to any one of claims **9-11, characterized in that**, further comprises:

> determining a driver state information;
> updating the risk assessment information based on the driver state information;
> uploading the driver state information and an updated risk assessment information to the cloud.

13. The risk assessment method according to claim **12, characterized in that**, further comprises:

> obtaining a historical data in the cloud, when the system capability information, the environmental safety information and/or the driver state information are missing; wherein the historical data comprises the system capability information, the environmental safety information and/or the driver state information;
> determining a missing system capability information, environmental safety information, and/or driver state information based on the historical data.

14. The risk assessment method according to claim **13, characterized in that**, after determining the target risk assessment result according to the risk assessment information, comprises:

> classifying a scope of the risk assessment information to obtain a risk level information;
> determining a risk level corresponding to a current vehicle based on the target risk assessment result and the risk level information;
> sending a safe driving operation instruction corresponding to the risk level to the vehicle driving system and/or sending a safety driving reminder to a driver corresponding to the risk level, based on the level classification information, when the risk level reaches a preset level.

15. A traffic environment risk assessment device, **characterized in that**, it comprises:

> a first obtaining module, configured to obtain an environmental risk information in a current driving environment of a vehicle;
> a determination module, configured to determine a target environmental risk type according to the environmental risk information;
> a second obtaining module, configured to obtain a target-environmental-risk-type-impact factor corresponding to the target environmental risk type, and determine a target risk point corresponding to the target environmental risk type, the target risk point indicating a predicted location that may collide with the vehicle ;

> a calculation module, configured to calculate an environmental risk potential energy of the target risk point, based on the target-environmental-risk-type-impact factor and the environmental risk information;
> an information sending module, configured to send a takeover warning information, when the environmental risk potential reaches a preset threshold.

16. A risk assessment device, **characterized in that**, it comprises:

> a system capability information determination module, configured to determine a system capability information according to a state information of a vehicle driving system;
> an environmental safety information determination module, configured to determine an environmental safety information according to a traffic environment around a vehicle;
> a risk assessment information determination module, configured to determine a risk assessment information based on the system capability information and the environmental safety information;
> a target risk assessment result determination module, configured to determine a target risk assessment result according to the risk assessment information.

17. An electronic device, **characterized in that**, comprises:

> processor;
> memory for storing processor-executable instructions;
> wherein, the processor is configured to execute the instructions, so as to realize the traffic environment risk assessment method according to any one of claims **1** to **7** or the risk assessment method according to any one of claims **8** to **14.**

18. A computer-readable storage medium, **characterized in that**, when instructions in the computer-readable storage medium are executed by a processor of an electronic device, the electronic device can execute the traffic environment risk assessment method described in any one of the claims **1** to **7** or the risk assessment method described in any one of claims **8** to **14.**

obtaining an environmental risk information in a current driving environment of a vehicle ⟍S101

determining a target environmental risk type according to the environmental risk information ⟍S103

obtaining a target-environmental-risk-type-impact factor corresponding to the target environmental risk type, and determining a target risk point corresponding to the target environmental risk type, the target risk point indicating a predicted location that may collide with the vehicle ⟍S105

calculating an environmental risk potential energy of the target risk point, based on the target-environmental-risk-type-impact factor and the environmental risk information ⟍S107

sending a takeover warning information, when the environmental risk potential reaches a preset threshold ⟍S109

FIG.1

S201

establishing a mapping relationship table between various environmental risks and the corresponding environmental risk impact factors

obtaining an environmental risk information in a current driving environment of a vehicle — S101

determining a target environmental risk type according to the environmental risk information — S103

obtaining the mapping relationship table, the mapping relationship table is configured to characterize the mapping relationships between various environmental risks and the corresponding risk type impact factors — S1051

obtaining the target-environmental-risk-type-impact factor matching the target environmental risk type, based on the target environmental risk type matching in the mapping relationship table — S1053

determining the target risk point corresponding to the target environmental risk type, the target risk point indicating the predicted location of a possible collision with the vehicle — S1055

calculating an environmental risk potential energy of the target risk point, based on the target-environmental-risk-type-impact factor and the environmental risk information — S107

sending a takeover warning information, when the environmental risk potential reaches a preset threshold — S109

FIG.2

obtaining an environmental risk information in a current driving environment of a vehicle — S101

determining a target environmental risk type according to the environmental risk information — S103

when the target environmental risk type of the environmental risk information is the visual risk type, obtaining the target-environmental-risk-type-impact factor corresponding to the target environmental risk type, and determining the relative location of the dynamic obstruction and/or the static obstruction with the vehicle as the target risk point — S1052

calculating an environmental risk potential energy of the target risk point, based on the target-environmental-risk-type-impact factor and the environmental risk information — S107

sending a takeover warning information, when the environmental risk potential reaches a preset threshold — S109

FIG. 3

obtaining an environmental risk information in a current driving environment of a vehicle — S101

determining a target environmental risk type according to the environmental risk information — S103

when the target environmental risk type of environmental risk information is invisible risk type, obtaining the target environmental risk type impact factor corresponding to the target environmental risk type, and determining whether the dynamic obstruction can pass through the corresponding obstruction according to the environmental risk information — S1054

when yes, determine a starting location of the obstruction relative to the vehicle as the target risk point — S1056

when no, determining a terminal location of the obstruction relative to the vehicle as the target risk point — S1058

calculating an environmental risk potential energy of the target risk point, based on the target-environmental-risk-type-impact factor and the environmental risk information — S107

sending a takeover warning information, when the environmental risk potential reaches a preset threshold — S109

FIG.4

FIG.5

FIG.6

EP 4 462 325 A1

when the environmental risk potential energy reaches a first preset threshold, sending a first takeover warning information

S1091

when the environmental risk potential reaches a second preset threshold, sending a second takeover warning information, wherein the second preset threshold is greater than the first preset threshold,

S1093

when no takeover confirmation information is received within a preset time interval after sending the second takeover warning information, then adjusting driving parameter of the vehicle to a preset parameter

S1095

lifting the takeover warning when the takeover confirmation information is received within the preset time interval

S1097

FIG.7

obtaining an road condition risk information according to a map information

S301

determining a starting location corresponding to a road condition risk when the road condition risk information satisfies a preset road condition risk type

S303

sending a third takeover warning information, when the distance between the vehicle and the starting point satisfies a preset distance

S305

FIG.8

FIG.9

| determining the system capability information based on the state information of a vehicle driving system | S401 |

| determining an environmental safety information according to a traffic environment around a vehicle | S403 |

| determining risk assessment information based on the system capability information and the environmental safety information | S405 |

| determine a target risk assessment result based on the risk assessment information | S407 |

FIG.10

obtaining a first performance information corresponding to a perception module ⟶ S501

determining a first state information corresponding to the perception module based on the first performance information ⟶ S503

obtaining a location information of the vehicle ⟶ S505

obtaining a driving track information ⟶ S507

obtaining a second performance information corresponding to a control module ⟶ S509

determining a second state information corresponding to the control module based on the driving track information, the location information, and the second performance information ⟶ S511

obtaining a third performance information corresponding to an execution module ⟶ S513

determining a third state information corresponding to the execution module based on the third performance information ⟶ S515

determining the system capability information according to the first state information, the second state information and the third state information ⟶ S517

FIG.11

determine a target environmental risk type according to a traffic environment ⟶ S601

obtaining a target-environmental-risk-type-impact factor corresponding to the target environmental risk type ⟶ S603

determining an environmental safety information based on the traffic environment and the target-environmental-risk-type-impact factor ⟶ S605

FIG.12

| determining the system capability information according to the state information of the vehicle driving system | S701 |

| determining the environmental safety information based on the traffic environment around the vehicle | S703 |

| determining the risk assessment information based on the system capability information and the environmental safety information | S705 |

| determining the target risk assessment result based on the risk assessment information | S707 |

| uploading the first perception information, the driving track information, the location information, the second performance information, the third performance information, the system capability information, the environmental safety information, the risk assessment information and the target assessment result to the cloud | S709 |

FIG.13

| determining a driver state information | S801 |

| updating the risk assessment information based on the driver state information | S803 |

| uploading the driver state information and an updated risk assessment information to the cloud | S805 |

FIG.14

| obtaining a historical data from the cloud when the system capability information, the environmental safety information and/or the driver state information is missing; wherein the historical data includes the system capability information, the environmental safety information and/or the driver state information in the same traffic environment | S901 |

| determining a missing system capability information, environmental safety information, and/or driver state information based on the historical data | S903 |

FIG.15

grading the range of risk assessment information to obtain a risk level information — S1001

determining the corresponding risk level of the current vehicle based on the target risk assessment results and the risk level information — S1003

when the risk level reaches a preset level, sending a safe driving operation instruction corresponding to the risk level to the vehicle driving system and/or sending a safe driving reminder corresponding to the risk level to the driver based on a level classification information — S1005

FIG.16

first obtaining module — 1101

determination module — 1103

second obtaining module — 1105

calculation module — 1107

information sending module — 1109

FIG.17

system capability information
determination module 1201

environmental safety information
determination module 1203

risk assessment information
determination module 1205

target risk assessment result
determination module 1207

FIG.18

processor

system bus

memory

operating system

computer program

network interface

non-volatile storage medium

electronic device

FIG.19

## INTERNATIONAL SEARCH REPORT

| International application No. |
|---|
| **PCT/CN2022/144358** |

**A. CLASSIFICATION OF SUBJECT MATTER**

G06Q10/06(2023.01)i

According to International Patent Classification (IPC) or to both national classification and IPC

**B. FIELDS SEARCHED**

Minimum documentation searched (classification system followed by classification symbols)

IPC: G06Q

Documentation searched other than minimum documentation to the extent that such documents are included in the fields searched

Electronic data base consulted during the international search (name of data base and, where practicable, search terms used)

CNKI, CJFD, WPABSC, CNTXT, ENTXTC, VEN: automatic, driving, takeover, control, car, threshold, risk, type, kind, factor, weight, coefficient, accident, collision; 自动, 驾驶, 接管, 控制, 车, 阈值, 风险, 类型, 种类, 因子, 因数, 权重, 系数, 加权, 事故, 碰, 撞

**C. DOCUMENTS CONSIDERED TO BE RELEVANT**

| Category* | Citation of document, with indication, where appropriate, of the relevant passages | Relevant to claim No. |
|---|---|---|
| PX | CN 114529130 A (WUHAN ROAD-TTH AUTOMOBILE CO., LTD.) 24 May 2022 (2022-05-24) <br> claims 1-10, description, paragraphs [0067]-[0164], figures 1-10 | 1-7,15,17-18 |
| PX | CN 114529131 A (WUHAN ROAD-TTH AUTOMOBILE CO., LTD.) 24 May 2022 (2022-05-24) <br> claims 1-10, description, paragraphs [0089]-[0214], figures 1-10 | 1-18 |
| Y | CN 111257005 A (BEIJING BAIDU NETCOM SCIENCE AND TECHNOLOGY CO., LTD.) 09 June 2020 (2020-06-09) <br> description, paragraphs [0028]-[0082], figures 1-9 | 1-7,15,17-18 |
| Y | CN 110414831 A (TSINGHUA UNIVERSITY) 05 November 2019 (2019-11-05) <br> description, paragraphs [0053]-[0146], figures 1-5 | 1-7,10,15,17-18 |
| X | CN 110949406 A (UISEE TECHNOLOGY (BEIJING) CO., LTD.) 03 April 2020 (2020-04-03) <br> description, paragraphs [0038]-[0084], figures 1-5 | 8-9,11-14,16-18 |

☑ Further documents are listed in the continuation of Box C.    ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 May 2023** | **18 May 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2022/144358** |

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | CN 110949406 A (UISEE TECHNOLOGY (BEIJING) CO., LTD.) 03 April 2020 (2020-04-03)<br>description, paragraphs [0038]-[0084], figures 1-5 | 10 |
| A | CN 112561170 A (QINGDAO WEILAI NETWORK INNOVATION TECHNOLOGY CO., LTD. et al.) 26 March 2021 (2021-03-26)<br>entire document | 1-18 |
| A | US 2017234689 A1 (ALLSTATE INSURANCE COMPANY) 17 August 2017 (2017-08-17)<br>entire document | 1-18 |

Form PCT/ISA/210 (second sheet) (July 2022)

**INTERNATIONAL SEARCH REPORT**

International application No.

**PCT/CN2022/144358**

| Box No. III | Observations where unity of invention is lacking (Continuation of item 3 of first sheet) |
| --- | --- |

This International Searching Authority found multiple inventions in this international application, as follows:

1) The inventive concept of independent claims 1 and 15 is "acquiring a target environment risk type influence factor corresponding to a target environment risk type, and calculating environmental risk potential energy of the target risk point on the basis of the target environment risk type influence factor and environmental risk information", which is a first inventive concept.

2) The inventive concept of independent claims 8 and 16 is "determining system capability information according to state information of a vehicle driving system, and determining risk assessment information on the basis of the system capability information and environmental security information", which is a second inventive concept.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

**INTERNATIONAL SEARCH REPORT**
Information on patent family members

| International application No. |
| --- |
| **PCT/CN2022/144358** |

| Patent document cited in search report | | | Publication date (day/month/year) | Patent family member(s) | | | Publication date (day/month/year) |
| --- | --- | --- | --- | --- | --- | --- | --- |
| CN | 114529130 | A | 24 May 2022 | None | | | |
| CN | 114529131 | A | 24 May 2022 | None | | | |
| CN | 111257005 | A | 09 June 2020 | None | | | |
| CN | 110414831 | A | 05 November 2019 | None | | | |
| CN | 110949406 | A | 03 April 2020 | None | | | |
| CN | 112561170 | A | 26 March 2021 | None | | | |
| US | 2017234689 | A1 | 17 August 2017 | EP | 3417242 | A1 | 26 December 2018 |
| | | | | EP | 3417242 | B1 | 21 December 2022 |
| | | | | US | 10942038 | B2 | 09 March 2021 |
| | | | | CA | 3014660 | A1 | 24 August 2017 |
| | | | | CA | 3014660 | C | 17 August 2021 |
| | | | | WO | 2017142935 | A1 | 24 August 2017 |

Form PCT/ISA/210 (patent family annex) (July 2022)